# EUROPEAN PATENT SPECIFICATION

(11) **EP 3 987 927 B1**
(45) Date of publication and mention of the grant of the patent: **28.10.2026**
(21) Application number: 21200907.0
(22) Date of filing: 05.10.2021
(51) Int. Cl.: A01M 7/00, A01B 79/00

(54) **SYSTEM CONFIDENCE DISPLAY AND CONTROL FOR MOBILE MACHINES**
SYSTEMKONFIDENZANZEIGE UND STEUERUNG FÜR MOBILE MASCHINEN
AFFICHAGE ET COMMANDE DE CONFIANCE DE SYSTÈME POUR MACHINES MOBILES

(30) Priority: 23.10.2020 US 202063104654 P; 07.04.2021 US 202117224635
(43) Date of publication of application: 27.04.2022
(73) Proprietor: Deere & Company, Moline, IL 61265 (US)
(72) Inventor: Ascherl, Margaux M., 68163 Mannheim (DE)
(74) Representative: Holst, Sönke

(56) References cited:
- US-A1- 2017 034 986
- US-A1- 2020 029 484

## Description

The present description relates to agricultural machines.

### BACKGROUND

There are a wide variety of different types of machines, such as agricultural machines, forestry machines, construction machines, and turf management machines, that perform a wide variety of operations at different types of worksites. These machines are often operated by an operator and have sensors that generate information during operation. Many of these machines include a variety of sensors that can be used to sense a variety of characteristics, for example characteristics relative to the environment in the which the machine is operating, characteristics relative to the operation of the machine, among various others.

US 2020/0029484 A1 describes a sprayer with distance sensors measuring a ground distance and a canopy distance. A control module comprises a confidence module determining a ground confidence value based on the measured ground distance and a canopy confidence value based on the measured canopy distance. A target selection module selects one of the distances as control basis for controlling movement of the implement based on the comparison of confidence values.

US 2017/034986 A1 discloses a mobile crop-thinning system configured to identify individual plants in a field and selectively remove selected plants. The system may include imaging devices, such as side-view and overhead cameras, for detecting plant characteristics used to decide whether a plant should be removed. In one embodiment, a thinning apparatus selectively applies a liquid to individual plants, for example an aliquot dose of liquid selected to kill the plant.

### SUMMARY

The present invention is defined by the claims.

### BRIEF DESCRIPTION OF THE DRAWINGS

FIG. 1 is a pictorial illustration of one example of a machine.
FIG. 2 is a block diagram of one example of a computing architecture.
FIG. 3 is a block diagram of one example of a data store, in more detail.
FIG. 4 is a block diagram of one example of a confidence system, in more detail.
FIG. 5 is a flow diagram showing example operations of the confidence system illustrated in FIG. 4.
FIG. 6 is a block diagram of one example of an interface display.
FIG. 7 is a partial block diagram and partial pictorial illustration of one example of a machine
FIG. 8 is a partial block diagram and partial top view of one example of a machine.
FIG. 9 shows one example of a side view of a row unit of the machine shown in FIG. 8.
FIG. 10 is a partial block diagram and partial side view showing on example of a machine.
FIG. 11 is block diagram showing the architecture illustrated in FIG. 2 deployed in a remote server architecture.
FIGS. 12-14 show examples of mobile devices that can be used in the architectures shown in the previous FIGS.
FIG. 15 is block diagram showing one example of a computing environment that can be using in the architecture illustrated in previous FIGS.

### DETAILED DESCRIPTION

While some examples described herein proceed in the context of specific sensors or sensor systems along with specific controls, it will be noted that the various systems and methods described herein are applicable to and can be used in combination with any number of sensors or sensor systems as well as any number of controls, some of which will be described herein.

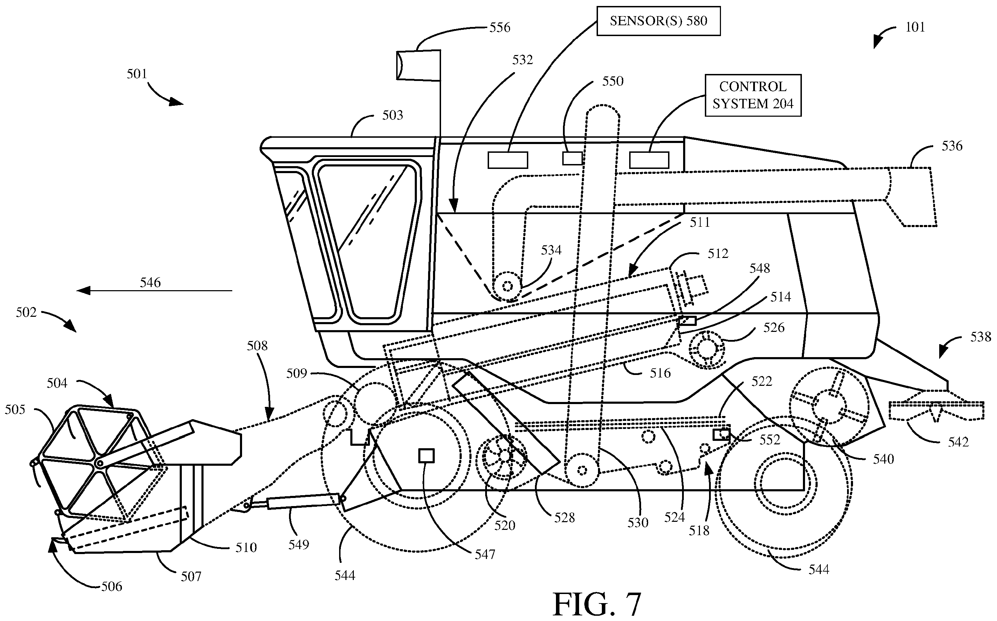

The machines according to the embodiments of FIGS. 7 to 10 are not falling under the claims, but are only shown for explanation.

The systems described herein can utilize a variety of sensors in the control of the agricultural machine. One such example is the use of a perception system (e.g., imaging system) on an agricultural spraying machine to control an operating parameter relative to the application of the sprayed substance, such as herbicide. For example, the perception system can generate sensor signals indicative of characteristics of weeds on the agricultural surface, such as a field, to be sprayed, such as weed location, weed density, weed type, as well as various other weed characteristics. Based upon the sensor signals, a control system on the agricultural spraying machine can automatically adjust an operating parameter of a controllable subsystem of the agricultural spraying machine. For example, but not by limitation, the control system can control the position of the boom or boom arms, characteristics of the spray, such as volume, rate, operating pressure, etc., activation or deactivation of spray nozzles, the position or orientation of spray nozzles, as well as a variety of other operations of other controllable subsystems to control the application of herbicide to the weeds.

The utilization of such control can, among various other advantages, improve the efficiency of the operation. For example, in the context of spraying, a spraying system may utilize a broadcast spraying application operation which applies the substance uniformly (or substantially uniformly) over the entire target area, that is, broadly over the entire field. In this way, the operator can be relatively assured that all of the weeds on the field will be covered effectively by the substance. However, broadcast spraying can be inefficient in that some of the substance can be applied to areas of the field where it is not needed and thus, throughout an entire spraying operation across an entire field, a quantity of substance can be wasted which can, among other disadvantages, increase costs of the operation and stress the environment and potentially harm crops or otherwise deleteriously affect the value of crops. Thus, by employing a control system that utilizes the detection of desired areas to be sprayed, such as locations of weeds on the field, and controls the spraying system to only apply substance to those desired areas, the operator can be assured that the substance is applied desirably while minimizing waste.

However, in such systems, the quality of the machine's performance is dependent on a number of factors. In the spraying example described above, the quality of the application of the substance, such as whether the herbicide was desirably applied to the weeds, is dependent upon the sensor signal accurately indicating the locations of the weeds on the field. The quality of the spraying machine's performance can also depend on the response time of the pump, valve, or nozzle in attempting to apply the substance to the detected weeds, as well as the response time of various actuators. Additionally, various operating characteristics or machine settings of the spraying machine, as well as various characteristics of the environment in which the spraying machine is operating, such as various characteristics of the field or various weather characteristics can also affect the performance of the spraying machine. Since these factors can vary, an operator cannot always be assured that the targeted substance application operation of the spraying machine is being performed desirably and thus the operator may choose to defer to the default method of broadcast spraying.

A control system, described herein, includes a confidence system that can determine a confidence level and generate a confidence level value indicative of a confidence in an ability of a machine to perform a desired operation. The confidence level may depend on a number of factors, such as the reliability or accuracy of the sensor signals being generated by the various sensors or sensor systems of the machine, various characteristics of the environment in which the machine is operating, various machine characteristics, such as operating characteristics or machine settings, as well as a variety of other factors. Based upon this confidence level value the confidence system can generate a variety of action signals to control an action of the machine. For example, but not by limitation, the action signal can provide an indication of the confidence level value to an operator or user, such as on an interface mechanism, control an operation of the machine, as well as a variety of other actions. In some examples, the operator or user can provide a confidence level value threshold used by the control system to determine what action to take. The confidence system can, for example, generate the various action signals based on the comparison of the confidence level value to the confidence level value threshold.

While some examples described herein proceed in the context of specific sensors and sensor systems along with specific controls, it will be noted that the various systems and methods described herein are applicable to and can be used in combination with any number of different sensors or sensor systems as well as any number of different controls, some of which will be described herein.

Additionally, it is to be understood that an operator of the various machines can be a local human operator, a remote human operator, or an automated system (both local and remote).

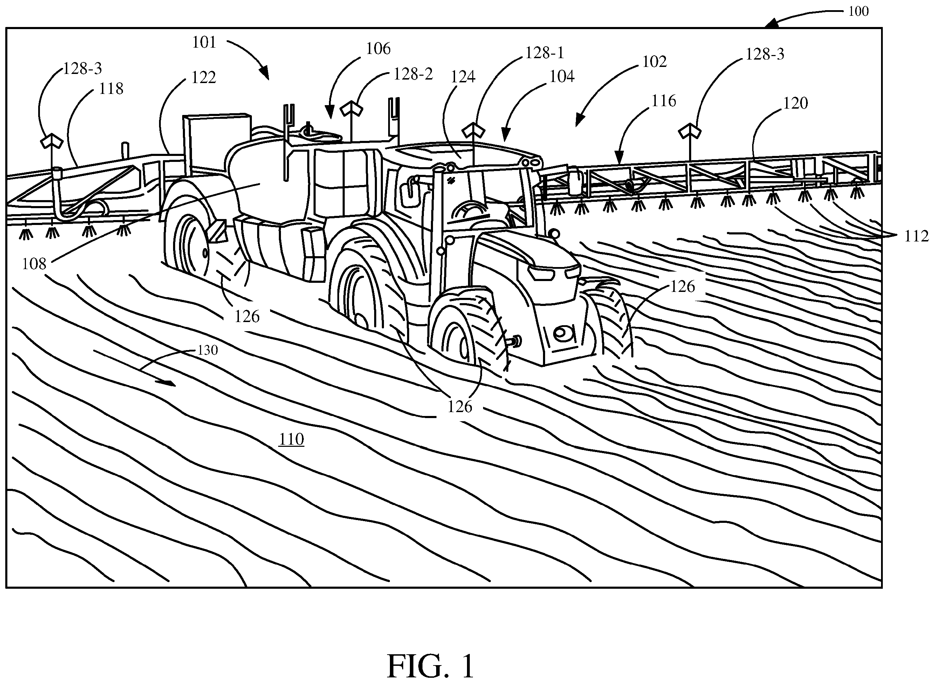

FIG. 1 illustrates an agricultural environment 100 in which a mobile machine 101 comprises an agricultural spraying system 102. In operation, and by way of overview, spraying system 102, shown with a towing vehicle 104 towing a towed implement 106, moves over agricultural surface 110, such as a field, in the direction indicated by arrow 130. In the illustrated example, implement 106 includes a tank 108 containing a substance that is to be applied to agricultural surface 110. Tank 108 is fluidically coupled to spray nozzles 112 by a delivery system comprising conduits, among other things, such as valves. A fluid pump is configured to pump the substance from tank 108 through the conduits and through spray nozzles 112. Spray nozzles 112 are mounted to and spaced apart along boom 116. Boom 116 includes boom arms 118 and 120 which can articulate or pivot relative to a center frame 122, thus boom arms 118 and 120 are moveable between a storage or transport position and an extended or deployed position. Additionally, boom 116 is moveable between a variety of positions relative to, for example, agricultural surface 110. For example, the height of boom 116 above the agricultural surface 110, when in the deployed position, can be adjusted.

In the example shown in FIG. 1, vehicle 104 is a tractor having an operator compartment or cab 124, which can have a variety of different interface mechanisms for controlling sprayer system 102 or providing a variety of displays. Operator compartment 124 can include interface mechanisms that allow an operator to control and manipulate spraying system 102. The interface mechanisms in operator compartment 124 can be any of a wide variety of different types of mechanisms. For instance, they can include input mechanisms such as a steering wheel, levers, joysticks, buttons, pedals, switches, etc. In addition, operator compartment 124 may include one or more interface display devices, such as monitors, or mobile devices that are supported within operator compartment 124. In that case, the interface mechanisms can also include actuatable elements displayed on the display devices, such as icons, links, buttons, etc. The interface mechanisms can include one or more microphones where speech recognition is provided on spraying system 102. They can also include audio interface mechanisms such as speakers, haptic interface mechanisms or a wide variety of other interface mechanisms. The interface mechanisms can include other output mechanisms as well, such as dials, gauges, meter outputs, lights, audible or visual alerts or haptic output mechanisms, etc.

Vehicle 104 also includes ground engaging elements as well, such as wheels 126. The ground engaging elements can also be tracks, or various other ground engaging elements. It will be noted that in other examples, spraying system 102 is self-propelled. That is, rather than being towed by a towing vehicle 104, the machine that carries the spraying system also includes propulsion and steering systems, among other things.

Spraying system 102 further includes a number of sensors 128 (identified as 128-1 to 128-3) placed at various locations on components of spraying system 102. In one example, sensors 128 are perception sensor systems, such as imaging systems (e.g., a camera and an image processing system). Sensors 128 can be located on towing vehicle 104, implement 106, including boom 116, as well as various other locations on spraying system 102.

As will be discussed in more detail herein, sensors 128 are, in one example, configured to sense various characteristics of an environment around spraying system 102, including characteristics relative to vegetation on agricultural surface 110, such as location, type, and density of weeds, etc.. Sensors 128 generate sensor signals indicative of the various characteristics. Those sensor signals can be received by a control system configured to generate action signals to command an action of spraying system 102. For example, an action signal to control an interface mechanism in operator compartment 124 to present an indication, such as a display, alert, etc., an action signal to control an operation of spraying system 102, such as adjusting a position or orientation of boom 116, adjusting an operation of spray nozzles 112, etc.,. In an illustrative example, sensors 128 can generate sensor signals indicative of a location of weeds on agricultural surface 110 and the control system can generate an action signal, based on the location of the weeds, to control the operation of spraying system 102 such that the substance is desirably applied to the location of the weeds.

FIG. 1 shows that the sensors can be mounted at one or more locations in the spraying system 102. For example, they can be mounted on towing vehicle 104, as indicated by sensors 128-1. They can be mounted on implement 106, as indicated by sensors 128-2. They can be mounted on and spaced apart along boom 116, including each of boom arms 118 and 120, as indicated by sensors 128-3. Sensors 128 can be forward-looking sensors configured to sense ahead of components of spraying system 102, side-looking sensors configured to sense to the sides of components of spraying system 102, or rearward-looking sensors configured to sense behind components of spraying system 102. In some examples, the point of view of sensors 128 can be adjusted, for instance, such that sensors 128 are provided with up to 360 degrees of perspective around spraying system 102. Sensors 128 can be mounted to spraying system 102 such that they travel above or below a canopy of vegetation on agricultural surface 110. It is noted that these are only some examples of the locations of sensors 128, and that sensors 128 can be mounted to one or more of these locations or various other locations within spraying system 102 or any combinations thereof.

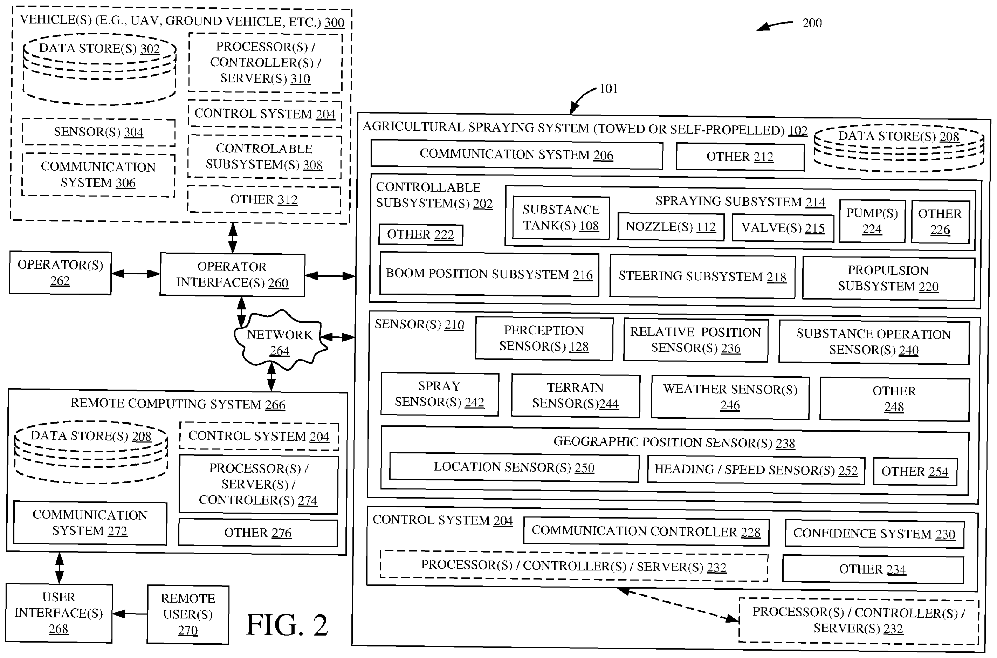

FIG. 2 is a block diagram of one example of a computing architecture 200 having, among other things, an agricultural spraying system 102 configured to perform a spraying operation on an agricultural surface, such as field 110. Some items are similar to those shown in FIG. 1 and they are similarly numbered. FIG. 2 shows that architecture 200 includes agricultural spraying system 102, one or more operator interfaces 260, one or more operators 262, network 264, remote computing system 266, one or more user interfaces 268, one or more remote users 270, and one or more vehicles 300. Agricultural spraying system 102 can include one or more controllable subsystems 202, control system 204, communication system 206, one or more data stores 208, one or more sensors 210, and it can include other items 212. Controllable subsystems 202 can include spraying subsystem 214, boom position subsystem 216, steering subsystem 218, propulsion subsystem 220, and it can include other items 222, such as other controllable subsystems. Spraying subsystem 214, itself, can include one or more valves 215, one or more pumps 224, one or more substance tanks 108, one or more nozzles 112, and it can include other items 226.

FIG. 2 also shows that sensors 210 can include any number of different types of sensors that sense or otherwise detect any number of characteristics. For example, sensors 210 can sense characteristics relative to the environment of components in computing architecture 200 such as characteristics of the agricultural surface 110, as well as characteristics relative to the components in computing architecture 200, such as operating characteristics or machine settings of components of spraying system 102 or vehicles 300, such as operating characteristics or machine settings of controllable subsystems 202 or 308. In the illustrated example, sensors 210 include one or more perception sensors 128, one or more relative position sensors 236, one or more geographic position sensors 238, one or more substance operation sensors 240, one or more spray sensors 242, one or more terrain sensors 244, one or more weather sensors 246, and sensors 210 can include other items 248, including other sensors. Geographic position sensors 238, can include one or more location sensors 250, one or more heading/speed sensors 252, and can include other items 254.

Spraying system 102 can include a towed implement and a towing vehicle (as shown in FIG. 1) or it can be self-propelled. Control system 204 is configured to control components and systems of spraying system 102. For instance, communication controller 228 is configured to control communication system 206. Communication system 206 is used to communicate between components of spraying system 102 or with other systems such as vehicle 300 or remote computing system 266 over a network 266. Network 266 can be any of a wide variety of different types of networks such as the Internet, a cellular network, a wide area network (WAN), a local area network (LAN), a controller area network (CAN), a near-field communication network, or any of a wide variety of other networks or combinations of networks or communication systems.

Remote users 270 are shown interacting with remote computing system 266, such as through user interfaces 268. User interfaces 268 can include a variety of interface mechanisms, including interface display mechanisms, that is, interface mechanisms configured to display information or including a display, such as an interactive display screen. Remote computing system 266 can be a wide variety of different types of systems. For example, remote computing system 266 can be in a remote server environment. Further, it can be a remote computing system (such as a mobile device), a remote network, a farm manager system, a vendor system, or a wide variety of other remote systems. Remote computing system 266 can include one or more processors, servers, or controllers 274, a communication system 272, and it can include other items 276. As shown in the illustrated example, remote computing system 266 can also include data stores 208 and control system 204. For example, the data stored and accessed by various components in computing architecture 200 can be remotely located in data stores 208 on remote computing system 266. Additionally, various components of computing architecture 200, such as controllable subsystems 202, can be controlled by control system 204 located remotely at remote computing system 266. Thus, in one example, a remote user 270 can control spraying system 102 or vehicles 300 remotely, such as by providing a user input through a user interface 268. These are merely some examples of the operation of computing architecture 200.

Vehicles 300 (e.g., unmanned aerial vehicle (UAV), ground vehicle, etc.) can include one or more data stores 302, one or more sensors 304, control system 204, one or more controllable subsystems 308, one or more processors, controllers, or servers 310, and can include other items 312. Vehicles 300 can be used in the performance of an operation on an agricultural surface, such as a spraying operation performed by spraying system 102 on field 110. For instance, a UAV or ground vehicle 300 can be controlled to travel over the agricultural surface and sense, with sensors 304, a variety of characteristics relative to the agricultural surface. For example, vehicles 300 can travel ahead of or behind spraying system 102. Sensors 304 can include any number of a wide variety of sensors, including, but not limited to, any of the sensor(s) 210. For example, sensors 304 can include perception sensors 128. In a particular example, in the context of a spraying operation, vehicles 300 can travel ahead of spraying system 102 to detect a location of weeds on field 110 or travel behind spraying system 102 to detect a characteristic relative to the application of substance to field 110, such as coverage of substance, etc.. Control system 204 can be located on vehicles 300 such that vehicle 300 can generate action signals to control an action of spraying system 102, such as adjusting an operating parameter of one or more controllable subsystems 202) based on characteristics sensed by sensors 304.

As illustrated, vehicles 300 can include a communication system 306 configured to communicate with communication system 206 or with, for example, remote computing systems 266 over network 264.

FIG. 2 also shows operators 262 interacting with spraying system 102, such as through operator interfaces 260. Interfaces 260 can include a variety of interface mechanisms, including interface display mechanisms, that is, interface mechanisms configured to display information or including a display, such as an interactive display screen. Interfaces 260 be located on spraying system 102, such as in operator compartment 124 as described above in FIG. 1, or can be another interface mechanism, such as a mobile device, communicably coupled to various components in computing architecture 200.

Before discussing the overall operation of agricultural spraying system 102, a brief description of some of the items in spraying system 102, and their operation, will first be provided.

Communication system 206 can include wired and wireless communication logic, which can be substantially any communication system that can be used by the systems and components of spraying system 102 to communicate information to other items, such as control system 204, sensors 210, controllable subsystems) 202, and confidence system 230. In another example, communication system 206 communicates over a controller area network (CAN) bus (or another network, such as an Ethernet network, etc.) to communicate information between those items. This information can include the various sensor signals and output signals generated by the sensor characteristics and/or sensed characteristics, and other items.

Perception sensors 128 are configured to sense various characteristics relative to the environment around spraying machine 100. For example, perception sensors 128 can be configured to sense characteristics relative to vegetation (e.g., weeds, crop, etc.) on agricultural surface 110, such as, but not limited to, the presence, location, quantity, density, type, etc., of weeds on agricultural surface 110. For illustration, but not by limitation, perception sensors 128 can be used with relative position sensors 236 to identify a geographic location of weeds on field 110. Perception sensors 128 can, in one example, comprise imaging systems, such as cameras.

Relative position sensors 236 are configured to sense the relative position of various components of agricultural spraying system 102 relative to one another or relative to the frame of sprayer 102. For example, a number of relative position sensors 236 can be disposed at locations within spraying system 102 (e.g., spaced apart along boom 116, located by nozzles 112, etc.). Sensors 236 can thus detect a position or orientation (e.g., tilt) of the various components of spraying system 102. For example, sensors 236 can sense the height of boom 116 (or boom arms 118 and 120) above agricultural surface 110, the height or orientation of nozzle(s) 112 relative to one another, relative to the ground or weeds, or relative to the frame of spraying system 102, as well as position information identifying the position of some components relative to various other components.. Relative position sensors 236 can sense the height of boom 116 or spray nozzles 112 above the detected location of weeds on agricultural surface 110. In another example, once the position of a sensor 236 is detected, then, by knowing the dimensions of the sprayer 102, the position and orientation of other items can be calculated.

Geographic position sensors 238 can sense the geographic position, and other derived variables, corresponding to spraying system 102. Sensors 238 can include location sensors 250, heading/speed sensors 252, and can include other sensors 254 as well. Location sensors 250 are configured to determine a geographic location of spraying system 102 on field 110. Location sensors 250 can include, but are not limited to, a Global Navigation Satellite System (GNSS) receiver that receives signals from a GNSS satellite transmitter. Location sensors 250 can also include a Real-Time Kinematic (RTK) component that is configured to enhance the precision of position data derived from the GNSS signal. Location sensors 250 can include various other sensors, including other satellite-based sensors, cellular triangulation sensors, dead reckoning sensors, etc.

Heading/speed sensors 252 are configured to determine a heading and speed at which spraying system 102 is traversing field 110 during the spraying operation. This can include sensors that sense the movement of ground-engaging elements (e.g., wheels or tracks 126) or can utilize signals received from other sources, such as location sensors 250.

Substance operation sensors 240 are configured to sense characteristics relative to the substance to be sprayed by spraying system 102. For illustration, but not by limitation, substance operation sensors 240 can sense the pressure of fluid within substance tanks 108, the pressure at which pumps 270 are pumping the substance, the viscosity, temperature, or other characteristics of the substance, a flow rate of the substance through the fluid pathway (e.g., conduits, valves, etc.), the pressure of the fluid within the fluid pathway, along with various other characteristics of the substance to be sprayed within spraying system 102.

Spray sensors 242 are configured to sense characteristics of the spray from spray nozzle(s) 112. For example, but not by limitation, spray sensors 242 can sense the spray distance (e.g., distance of nozzle tip to target), spray volume, the spray angle, spray coverage, spray impact, spray pattern shape (e.g., fan, cone, solid stream, flat, etc.) along with various other characteristics relative to the spray from nozzle(s) 112.

Terrain sensors 244 are configured to sense characteristics of the agricultural surface (e.g., field 110) over which spraying system 102 is traveling. For instance, terrain sensors 244 can detect the topography of the field (which may be downloaded as a topographical map or sensed with sensors such as accelerometers, inertial measurement units, etc.) to determine the degree of slope of various areas of the field. Sensors 244 can detect a boundary of the field, obstacles or other objects on the field, such as, rocks, root-balls, trees, etc., among other things.

Weather sensors 246 are configured to sense various weather characteristics relative to the agricultural surface. For example, weather sensors 246 can detect the direction and speed of wind traveling over the agricultural surface over which spraying system 102 is traveling. They can detect precipitation, humidity, temperature, as well as numerous other conditions. This information can be obtained from a remote weather service as well.

Sensors 210 can comprise any number of different types of sensors. For example, sensors 210 can include potentiometers, Hall Effect sensors, and various mechanical and/or electrical sensors. Sensors 210 can also comprise various electromagnetic radiation (ER) sensors, optical sensors, imaging sensors, thermal sensors, LIDAR, RADAR, Sonar, radio frequency sensors, audio sensors, inertial measurement units, accelerometers, pressure sensors, flowmeters, etc. Additionally, while multiple sensors are shown, sensors 210 can comprise a single sensor configured to sense a variety of the different characteristics and can produce a single sensor signal indicative of the multiple characteristics. For instance, sensors 210 can comprise an imaging sensor mounted on spraying system 102 or vehicles 300. The imaging sensor can generate an image that is indicative of multiple characteristics relative to both spraying system 102 and vehicles 300 as well as their environment (e.g., agricultural surface 110). Further, while multiple sensors are shown, more or fewer sensors 210 can be utilized. For example, one or more sensors can be multi-functional in that they can sense a variety of different characteristics. For instance, a single sensor may sense both position information and characteristics relative to agricultural surface 110.

Additionally, it is to be understood that some or all of the sensors 210 can be controlled as a controllable subsystem 202, by control system 204. For example, control system 204 can generate a variety of action signals to control the operation, position, orientation, as well as various other operating parameters or settings of sensors 210. For instance, because the vegetation on agricultural surface 110 can obscure the line of view of, for example, perception sensors 128, control system 204 can generate action signals to adjust the position or orientation of perception sensors 128 to thereby adjust their line of sight. These are examples only. Control system 204 can generate a variety of action signals to control any number of other operating parameters of sensors 210 as well.

Controllable subsystems 202 illustratively include spraying subsystem 214, boom position subsystem 216, steering subsystem 218, propulsion subsystem 220 and can include other subsystems 222 as well. The controllable subsystems 202 are now briefly described.

Spraying subsystem 214 includes one or more pumps 224 configured to pump substance (e.g., herbicide, pesticide, insecticide, etc.) from one or more substance tanks 108 through a fluid pathway (e.g., conduits, valves, etc.) to one or more spray nozzles 112 which can be mounted on, for example, a boom, as well as various other locations on spraying system 102. Spraying subsystem 214 can include other items 226 as well. For example, spraying subsystem 214 can include a valve subsystem (or a set of one or more valves) 215 that can include any number of controllable valves placed in various locations within spraying system 102. The controllable valves 215 can be placed along the fluid pathway (e.g., a conduit extending from pumps 224 to spray nozzles 112) to control the flow of substance through the fluid pathway. Some or each of spray nozzles 112 can have an associated valve (e.g., pulse-width modulation valve, solenoid, etc.) that can be controllably operated. For example, the valves 215 can be controllable between an on (e.g., open) and off (e.g., closed) position. The valve(s) 215 can also be proportional valves that can be used to proportionally control the flow of substance through the valves (e.g., flow rate).

Substance tanks 108 can comprise multiple hoppers or tanks, each configured to separately contain a substance. For example, substance tanks 108 can separately contain a different type of substance or different compositions of the same type of substance (e.g., different compositions of herbicides), which can be controllably and selectively pumped by pumps 224 through the fluid pathway to spray nozzles 112 under the control of valves 215. For instance, upon sensors 210 sensing the presence of weeds on agricultural surface 110 and generating sensor signals indicative of the presence of weeds, control system 204 can generate control signals to control pumps 224, valves 215, and nozzles 112 to pump substance from one of the multiple hoppers or tanks containing the desired substance (e.g., herbicide) based on the sensor signals. In another example, control system 204 can control pumps 224, valves 215, and nozzles 112 to achieve desired operational variables (e.g., pressure, speed, flowrate, etc.). For example, upon sensors 210 sensing the geographic location of weeds on agricultural surface 110 and generating sensor signals indicative of the geographic location, control system 204 can generate control signals to control pumps 224, valves 215, and nozzles 112 to adequately cover the geographic location of the weeds. For instance, control system 204 can generate control signals to increase or decrease the operating pressure or speed of pumps 224, the position of valves 215 to control flow rate of substance, the position or orientation of nozzles 112, as well as various other controls. In one example, the substances in substance tanks 108 can be mixed with a substance that increases the visibility of the substance such as a dye or colorant.

Nozzles 112 are configured to apply or direct the substance to agricultural surface 110. Control system 204 can control nozzles 112 individually or separately. For example, control system 204 can turn nozzles 112 on (e.g., open) and off (e.g., closed). Additionally, control system 204 can control nozzles 112 to change a position or orientation (e.g. tilt). In another example, control system 204 can control nozzles 112 to change a characteristic of the spray emitted by nozzles 112. For example, control system 204 can control a movement of nozzles 112, such as by controlling one or more actuators to cause a movement, such as a rotational movement, that widens or narrows a fluid passageway through nozzles 112 to affect the pattern of spray, the volume of spray, as well as various other spray characteristics.

Boom position subsystem 216 is configured to actuate movement of boom 116, including individual boom arms 118 and 120. For example, boom position subsystem 216 can include a number of actuators (such as electrical, hydraulic, pneumatic, mechanical or electromechanical actuators) that are coupled to various components to adjust one or more of a position or orientation of boom 116 or individual boom arms 118 and 120. For example, boom position subsystem 216 can adjust a height of boom 116 above agricultural surface 110. For instance, upon the detection of characteristics relative to vegetation on the agricultural surface 110 control system 204 can control boom position subsystem 216 to raise or lower boom 116. By way of example, when control system 204 detects a characteristic relative to weeds (e.g., quantity, type, geographic location, height, density, etc.) on field 110, control system 204 can generate action signals to boom position subsystem 216 to adjust the position of boom 116 relative to field 110.

Steering subsystem 218 is configured to control the heading of spraying system 102, by steering the ground engaging elements (e.g., wheels or tracks 126). Control system 204 can generate action signals to control steering subsystem 218 to adjust the heading of spraying system 102. For example, when control system 204 receives sensor signals generated by sensors 210 indicative of a geographic location of weeds, control system 204 can generate action signals to control steering subsystem 218 to adjust the heading of spraying system 102. In another example, control system 204 can generate action signals to control steering subsystem 218 to adjust the heading of spraying system 102 to comply with a commanded route, such as an operator or user commanded route, a spray application map, etc. Control system 204 (or another item) can generate the spray application map based upon characteristics of the agricultural surface sensed by one or more of sensors 210. For instance, control system 204 can generate the spray application map based on signals from perception sensors 128, as well as one or more of sensors 308 on vehicle 300 traveling over agricultural surface 110 ahead of spraying system 102.

Propulsion subsystem 220 is configured to propel spraying system 102 over the agricultural surface, such as by driving movement of ground engaging elements (e.g., wheels or tracks 126). Propulsion subsystem 220 can include a power source, such as internal combustion engine or other power source, and a transmission that drives the set of ground engaging elements 126. In one example, control system 204 can receive sensor signals generated by sensors 210, the confidence level determined by confidence system 230, as well as various other signals and control propulsion subsystem 220 to adjust the speed of spraying system 102.

Control system 204 is configured to receive or obtain various data, including historical data, pre-existing data, data indicative of characteristics relative to the environment of agricultural spraying system 102 or vehicle(s) 300, such as characteristics of agricultural surface 110, data indicative of factors or characteristics that can affect the performance of the sensors in architecture 200, characteristics relative to the operation of agricultural spraying system 102 or vehicles 300, including operating characteristics or machine settings of the various components thereof, as well as a variety of other data, as will be described further herein.

Additionally, and as will be described in more detail herein, confidence system 230 of control system 204 can, based on a variety of information, such as the information received or obtained by control system 204, including information accessed within data stores 208 or data received from sensors 210, as well as various other data from various other sources, determine a confidence level indicative of a confidence in the ability of the mobile machine 101 to perform, or carry out, a desired task. In the example of spraying system 102, the confidence level can be indicative of an ability of spraying system 102 to apply the sprayed substance desirably, for instance, to the desired location on agricultural surface 110, such as the location of weeds sensed by sensors 210, as in the case of a targeted substance application operation. The confidence level can be affected by a variety of factors or characteristics, such as, the quality or accuracy of sensor signals provided by sensors on the mobile machine 101, the response time of the controllable subsystems, current operating characteristics or machine settings of the mobile machine 101, characteristics of the environment in which mobile machine 101 is operating, as well as a number of other factors or characteristics. These various factors or characteristics that can affect the confidence level can be indicated by the variety of information received or obtained by confidence system 230. Confidence system 230 can generate, as an output, a confidence level value indicative of the determined confidence level. The confidence level value can be indicated by a representation. The representations can be numeric, such as percentages (e.g., 0% - 100%) or scalar values, gradation or scaled (e.g., A-F, "high, medium, low", 1-10, etc.), advisory (e.g., "change operation", "can't detect", "slow", etc.), as well as various other representations.

Control system 204 can, based on the confidence level value, generate a variety of action signals to control an action of spraying system 102 (as well as other components of computing architecture 200, such as vehicles 300, remote computing system 266, etc.). For example, based on the confidence level value, control system 204 can generate an action signal to present an indication (e.g., alert, display, notification, etc.) to operator 262 on operator interfaces 266 or to user 270 on user interfaces 268. In another example, based on the confidence level value, control system 204 can generate an action signal to control an action of one or more of the various components of computing architecture 200, for example, but not limited to, operating parameters or settings of one or more of controllable subsystems 202 or controllable subsystems 308. For instance, based on the confidence value, control system 204 can generate an action signal to control spraying subsystem 214 to switch between targeted spraying and broadcast spraying, such as by the activation or deactivation of one or more of nozzles 112. These are examples only. Control system 204 can generate any number of action signals to control any number of actions of the components in computing architecture 200, including any number of action signals based on a confidence value generated by confidence system 230.

Control system 204 can include various other items 234, as well, including, but not limited to, other controllers. For example, control system 204 can include a dedicated controller corresponding to each one of the various controllable subsystems, for example, a spraying subsystem controller (as well as controllers for the various components of the spraying subsystem, such as a nozzle controller), a boom position subsystem controller, a steering subsystem controller, a propulsion subsystem controller, as well as various other controllers for various other controllable subsystems. Additionally, control system 204 can include various logic components, for example, image processing logic. Image processing logic can process images generated by sensors 210, such as images generated by perception sensors 128, to extract data from the images (e.g., as values). Image processing logic can utilize a variety of image processing techniques or methods, including, but not limited to, RGB, edge detection, black/white analysis, machine learning, neural networks, pixel testing, pixel clustering, shape detection, as well any number of other suitable image processing and data extraction techniques or methods.

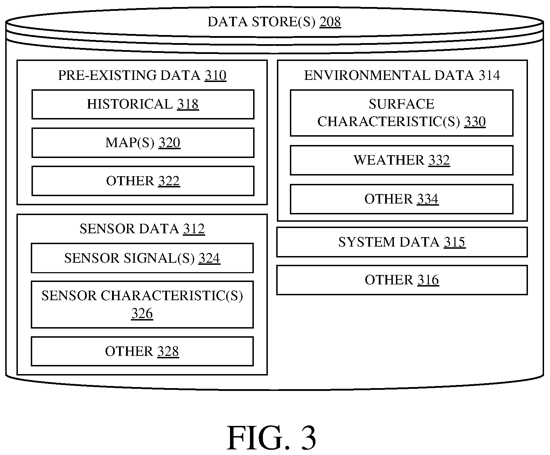

FIG. 3 is a block diagram illustrating one example of data stores 208 in more detail. While only data stores 208 are illustrated in FIG. 3, it will be noted that a variety of other data stores can be used, such as data stores 302. Additionally, some or all of the items illustrated in FIG. 3 can be located on a variety of other data stores, including data stores 302. FIG. 3 shows that data stores 208 can include pre-existing data 310, sensor data 312, environmental data 314, system data 315, and can include other data 316 as well. Pre-existing data 310, itself, includes historical data 318, one or more maps 320, and can include other pre-existing data 322. Sensor data 312, itself, can include one or more sensor signals 324, one or more sensor characteristics 326, and can include other sensor data 328. Environmental data 314, itself, can include surface characteristics data 330, weather data 332, and can include other environmental data 334.

The data in data stores 208 is accessible to various other components of computing architecture 200. For example, the data in data stores 208 can be used by control system 204. For instance, the data in data stores 208 can be accessed or otherwise obtained by confidence system 230, such as by communication system 206 or data store accessing logic 366 (discussed below), and used in the generation of a confidence level value indicative of a confidence in ability of the machine to perform a desired task or operation.

Pre-existing data 310 can include any data that is accessible or otherwise available to the components in computing architecture 200 prior to the machine beginning an operation, such as spraying system 102 beginning a spraying operation at field 110. Pre-existing data includes historical data 318. Historical data 318 can include, for example, data from prior operations of the machine, prior operation data on the particular worksite, etc. For example, in the context of a spraying operation, historical data 318 can include previous indications of characteristics of the vegetation from either prior operations of the machine or prior operations on the particular worksite. For instance, it can include stored image data of various weeds detected at the particular worksite (or other worksites). In this way, a current image generated by perception sensors 128 can be compared, by confidence system 230, to a previous image. Historical data 318 can further include previous confidence determinations or previous confidence values generated by confidence system 230, for example, confidence determinations made as to a particular sensor, or confidence determinations made in previous operations, including previous confidence determinations made in similar conditions as the current operation.

Maps 320 can include images taken of a worksite, including the current worksite, for example images of the worksite taken by a satellite, by an aerial vehicle, such as UAV 300, during a fly-over operation, images of the worksite taken by vehicles 300 that travel the worksite prior to the operation of the machine. Maps 320 can also include maps generated by various data gathering operations, for example, maps generated on the basis of data collected during previous operations on the worksite by the machine (e.g., row data, pass data, etc.) as well as maps generated on the basis of the images taken as described above. For example, in the context of spraying, a map of the particular field can be generated that indicates, among other things, the types, quantity, density, locations, etc. of various vegetation on the field, including, the types, quantity, density, locations of various weeds on the field. In this way, sensor signals generated by sensors 210 during a current operation can be compared, by confidence 230, to the pre-existing indications of the map.

Sensor data 312 can include stored sensor signals 324 which can include previously generated sensor signals from previous operations or from an earlier time or at another location at the worksite, as well as real-time or near real-time sensor signals generated by sensors 210. For example, in the context of an image, a current image generated by perception sensors 128 can be compared, by confidence system 230, to a previous image generated by perception sensors 128, for instance, to determine a quality, such as a clarity, etc., of the current image as compared to previous images. In another example, a current sensor signal from a particular sensor can be compared, by confidence system 230, to a sensor signal generated by another sensor. For example, in the context of a combine harvesting operation, a threshing rotor pressure sensor that generates a pressure signal indicative of a biomass of crop being processed by the combine harvester can be compared to an image generated by an imaging system, such as perception sensors 128, of the vegetation in front of the combine harvester. In this way, confidence system 230 can, in the determination of confidence, consider if the sensor signal accurately corresponds to an expected value indicated by another sensor (e.g., does the biomass indicated by the pressure sensor make sense in light of the characteristics of the vegetation as indicated by the images of the vegetation in front of the combine harvester?). Additionally, it will be noted that a current sensor signal can be compared, by confidence system 230, to more than one other sensor signal generated by more than one other sensor.

Sensor data 312 can further include sensor characteristics data 326 which can include data indicative of various characteristics of the sensor device. For example, operating characteristics of the sensor, including operational capabilities of the particular sensor device as well as operating characteristics or settings of the sensor device at the time the current sensor signals were generated. In this way, the operating characteristics or settings of the sensor can be considered, by confidence system 230, in determining the confidence level, for example, the operating characteristics or settings of the sensor given the characteristics of the environment in which the sensor signal was generated. For example, in the context of an imaging system, the shutter speed, the zoom, focus plane, etc. In another example, sensor characteristics data 326 can include status data of various sensors 210, for example, a current signal strength of the sensor device. For instance, in the context of geographic position sensors 238, the signal strength between the sensor and satellite. In another example, the status data can include calibration data (e.g., the last time the sensor was calibrated, the degradation of the sensor, etc.), as well as the model of the sensor, the type or model of the sensor, the age of the sensor, etc.

Environmental data 314 can include surface characteristics data 330. Surface characteristics data 330 can include a variety of data indicative of characteristics relative to a worksite, such as agricultural surface 110. In this way, conditions or characteristics of the environment in which the sensor signals are generated and the machine operates can be considered by confidence system 230. For example, in the context of perception sensors 128 detecting weeds during a spraying operation, the characteristics of the vegetation on field 110. For instance, the types, quantity, density, and locations of the vegetation on the field. For illustration, but not by limitation, based on the density and type of vegetation on field 110, confidence system 230 can determine a likely visibility of a characteristic of interest, such as the location of weeds, in the determination of the confidence level.

Environmental data 314 can include weather data 332. Weather data 332 can be provided by weather sensors 246 as well as received from a remote weather service. Weather data can include a variety of data indicative of real time or near real-time weather conditions relative to the worksite, as well as historical weather data. In this way, confidence system 230 can consider, in the determination of the confidence level, the weather conditions in which the sensors 210 generate the sensor signals and the weather condition in which the mobile machine operates. For example, precipitation at the worksite can affect the reliability of an image generated by perception sensors 128.

System data 315 can include a variety of data indicative of characteristics of the machine being used in operation (e.g., spraying system 102). For example, but not by limitation, operating characteristics and machine settings, current operating system information (e.g., version of operating system or software), maintenance information, degradation of components, as well as a variety of other data. In this way, characteristics and conditions of the machine can be considered by confidence system 230 in determining the confidence in the ability of the machine to perform the desired task. For example, if a newer version of image recognition software is available but not being currently used by the machine. In other examples, the operating characteristics or machine settings may affect the ability of the machine to perform the desired task, and thus, will affect the confidence level determined by confidence system 230. For instance, in the context of spraying system 102, the spraying system 102 may be moving too fast, the boom may be too high or low, the operating pressure or speed of pumps 224 may be too high or too low, one or more of the valves 215 or nozzles 212 may be plugged, for the spraying system 102 to perform a targeted spraying application. These are merely examples of some of the operating characteristics or machine settings that can affect the ability of mobile machine 101 to perform the desired task. Various other operating characteristics and machine settings can be included in system data 315 and used by confidence system 230 in determining a confidence level.

It will be understood that these are examples only and that data stores 208 (as well as other data stores such as data stores 302) can include any of a wide variety of data, including any of a wide variety of data indicative of factors or characteristics that can affect the ability of mobile machine 101 to perform the desired task, and thus affect the confidence level determined by confidence system 230. Additionally, confidence system 230 can, in the determination of the confidence level and generation of a confidence level value, consider any of a wide variety of data and any combinations thereof.

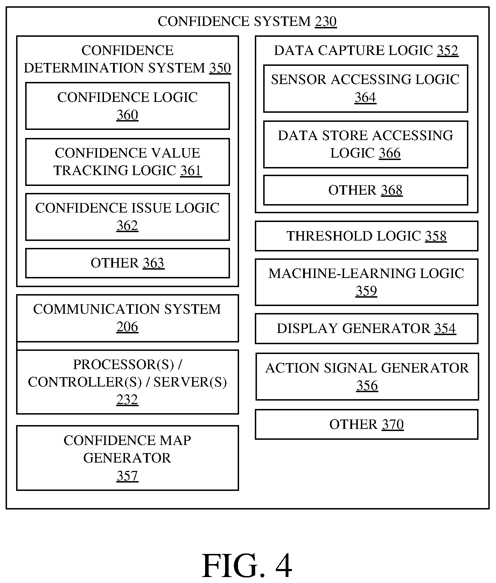

FIG. 4 is a block diagram illustrating one example of confidence system 230 in more detail. Confidence system 230 can include confidence determination system 350, data capture logic 352, communication system 206, processor(s)/controller(s)/server(s) 232, display generator 354, action signal generator 356, confidence map generator 357, threshold logic 358, machine learning logic 359, and it can include other items 370 as well. Sensor confidence determination system 350 can include confidence logic 360, confidence value tracking logic 361, confidence issue logic, and it can include other items 363. Data capture logic 352 can include sensor accessing logic 364, data store accessing logic 366, and it can include other items 368 as well.

In operation, confidence system 230 determines a confidence in the ability of the mobile machine 101 to perform a desired task or operation. For instance, the confidence in the ability of spraying system 102 to perform a targeted substance application operation in which spraying system 102 attempts applies substance, such as herbicide, only to weeds on field 110, rather than uniformly over the field such as in a broadcast substance application operation. In other examples, the confidence in the ability of a harvesting machine to maintain a desired header height relative to the surface of the field, the confidence in the ability of a planting machine to maintain the depth of a furrow opener, or the confidence in the ability of a tillage machine to maintain the depth of work tools. These are merely examples. Confidence system 230 can determine a confidence in the ability of various machines to perform various operations. Confidence system 230 generates a confidence level value indicative of the determined confidence in the ability of the mobile machine 101 to perform the desired task. For example, confidence system 230 can generate as a confidence level value, a numeric representation, such as percentages (e.g., 0% - 100%) or scalar values, gradation or scaled representation (e.g., A-F, "high, medium, low", 1-10, etc.), advisory representations (e.g., "change operation", "can't detect", "slow", etc.), as well as various other representation. In this way, the operator or control system can be made aware of a reliability or level of trust for the indications used in the control of the machine. Upon determining the confidence level and generating the confidence level value, confidence system 230 can generate a variety of action signal(s), through action signal generator 356, to, for instance, control the operation of the mobile machine 101 (e.g., spraying system 102) or to provide displays, recommendations, and/or other indications (e.g., alerts), such as to an operator 262 on operator interfaces 260 or to a remote user 270 on user interfaces 268.

It should be noted that confidence system 230 can determine a confidence in the ability of the mobile machine 101 to perform a desired task or operation at any number of times and given any number of states of the machine. For example, confidence system 230 can determine a confidence in the ability of the mobile machine 101 to perform a desired task or operation during operation, prior to operation, or after operation. Confidence system 230 can determine a confidence in the ability of the mobile machine 101 to perform a desired task or operation when the machine is stationary or when the machine is moving. Confidence system 230 can determine a confidence in the ability of the mobile machine 101 to perform a desired task or operation when the machine is in a "key-on" state, such that power (e.g., from a battery) is supplied to at least some components of the machine but, for instance, the engine is not yet running.

Data capture logic 352 captures or obtains data that can be used by other items on confidence system 230. Data capture logic 352 can include sensor accessing logic 364, data store accessing logic 266, and other logic 368. Sensor accessing logic 364 can be used by sensor confidence determination system 350 to obtain sensor data (or values indicative of the sensed variables or characteristics) provided from sensors 210, as well as other sensors such as sensors 304 of vehicles 300, that can be used to determine a confidence level. For illustration, but not by limitation, sensor accessing logic 364 can obtain sensor signals indicative of characteristics of weeds on field 110 (e.g., type, quantity, density, location, etc.).

Additionally, data store accessing logic 366 can be used to obtain data previously stored on data stores (e.g., one or more of data store(s) 208, 302, etc.) or data previously stored at remote computing system 266. For example, this can include any or all of the data in data stores as illustrated in FIG. 3.

Upon receiving or obtaining various data, confidence determination system 350 can determine a confidence level, indicative of a confidence in the mobile machine 101 being able to perform the desired task or operation, and generate a confidence level value indicative of the confidence level. The confidence level value can be output as a representation in various ways, as discussed above. In some examples, the confidence level values are representative of an expected accuracy or error of the mobile machine 101 in performing the task. For instance, a confidence level value of 80% may indicate that the machine will perform the desired task 80% of the time. In the example of a targeted spraying task, this can translate to substance being applied to the weeds 80% of the time, or that 80% of the detected weeds will have substance applied to them. The various factors and characteristics indicated or otherwise represented in the various data can affect the confidence level determined by confidence determination system 350. For instance, characteristics and factors affecting the reliability or accuracy of the sensor signals or characteristics indicated by the sensor signals, the operating characteristics and machine settings of mobile machine 101, the characteristics of the environment in which mobile machine 101 is operating, as well as a variety of other factors and characteristics. Confidence logic 360 receives or obtains the various data and, based on the various data, determines a confidence level indicative of a confidence in the ability of the mobile machine 101 to perform the desired task.

For instance, in an example in which the desired task is a targeted substance application operation performed by a spraying system, such as spraying system 102, the confidence level indicates a confidence in the spraying system being able to apply substance to targeted locations on the field, such as the application of herbicide to the detected location of weeds on the field. The ability of the spraying system to perform the targeted substance application operation can be affected by a variety of factors and characteristics. For instance, the spraying system, and sensors thereof, must be able to accurately detect and generate sensor signals indicative of the location of weeds on the field. The accuracy or reliability of the sensor signals can be affected by a number of factors and characteristics. For example, characteristics of the environment in which the spraying system is operating, such as weather and field characteristics, characteristics of the sensors, as well as operating characteristics and machine settings of the spraying system. For instance, if the field is experiencing heavy rain or other precipitation, or if the vegetation on the field is particularly dense, the ability of perception sensors 128 to perceive and subsequently accurately detect the location of weeds may be affected. Additionally, characteristics of the sensor may also affect the accuracy of the detected location of weeds. For instance, if the sensors are in need of calibration, if the operational parameters of the sensors are suboptimal, such as their position or orientation, in the case of perception sensors 128, the shutter speed, zoom, focal plane, etc., if the signal strength of the sensor is inadequate, such as in the case of the signal strength of a position sensor 238 communicating with a satellite, as well as a variety of other sensor characteristics. Further, characteristics of the spraying system, such as operational characteristics and machine settings, can affect the accuracy of the detected location of weeds on the field. For instance, if the spraying system is traveling at too high a speed, the ability of the sensors to detect the position of weeds on the field may be deleteriously affected. These are merely examples.

The ability of the spraying system to perform the targeted substance application operation can also be affected by characteristics of the environment in which the spraying system is operating. For example, weather conditions at the field may affect the ability of the spraying system to apply substance to a specific location on the field. For instance, if the field is experiencing a relatively high wind speed, the spray may be carried by the wind such that the substance is not applied to the desired location. This is merely an example, various characteristics of the environment in which a mobile machine operates can affect the ability of the mobile machine to perform the desired task.

The ability of the spraying system to perform the targeted substance application operation can also be affected by characteristics of the spraying system, such as operating characteristics and machine settings. For example, the operating characteristics or settings of the spraying subsystem may affect the ability of the spraying system to apply substance to the desired location on the field. For instance, the operating pressure or speed of the pumps may be suboptimal, the position or orientation of the nozzles may be such that they cannot apply substance to the desired location, the nozzles, valves, or conduit may be fully or partially plugged, and thus affect the characteristics of the flow or application of substance. In other examples, the boom on the spraying system may be too far above the surface of the field for the nozzles mounted on the boom to desirably apply substance to specific locations on the field. Further, the speed of the spraying system 102 may be too high for the substance to be accurately sprayed to a particular location on the field. These are merely example, various machine characteristics, including various operating characteristics and machine settings, can affect the ability of the mobile machine to perform the desired task.

It will be understood that confidence determination system 350 can determine a confidence level and generate a corresponding confidence level value for any number of desired tasks or operations to be performed by any number of different types of machines. Further, confidence determination system 350 can determine a confidence level and generate a corresponding confidence level value for multiple desired tasks or operations to be performed by the machines during the same agricultural operation. For instance, in the example of a spraying system, such as spraying system 102, confidence determination system 350 can determine a respective confidence level and generate a respective confidence level value for multiple desired tasks or operations of the spraying system, such as a respective confidence level and confidence level value for the substance application operation as well as a respective confidence level and confidence level value for a boom height operation, wherein the control system attempts to maintain the boom at a desired height above the surface based on various inputs, such as sensor data indicative of a topography of the field or topographic values provided by a topographic map of the field.

It will be noted that these are examples only. The techniques, methods, as well as the data used in the determination of confidence and generation of confidence values can vary depending on a number of variables. For example, but not by limitation, the type of operation, the type of machine, the type of sensor, the type of vegetation (e.g., crop(s), weed(s), etc.), the characteristic(s) being detected, the control being adjusted, as well as a number of other variables.

Based on the generated confidence level value, confidence system 230 can generate, via action signal generator 356, a variety of action signal(s) used to, for instance, control the operation of the machine, such as spraying system 102 or to provide displays, recommendations, or other indications (e.g., alerts), such as to an operator 262 on an operator interface 260 or to a remote user 270 on a user interface 268. For instance, based on the generated confidence level value, confidence system 230 can generate an action signal to switch between a targeted substance application operation and a broadcast substance application operation. In another example, based on the generated confidence level value, a display, recommendation, or other indication can be provided to operators 262 on operator interfaces 260 or to remote users 270 on user interfaces 268, such as a display, recommendation, or other indication generated by display generator 354. For example, a display indicative of the confidence level value, a recommendation to adjust an operation of the machine, etc. In another example, confidence system 230 can provide an operator or user actuatable element on an interface display that, when actuated, changes an operation of the machine, such as changes the operation of spraying system 102 between a targeted substance application operation and a broadcast substance application operation. In another example, based on the display, recommendation, or other indication generated by confidence system 230, the operator or user can manually (e.g., via a user input on an interface) adjust an operation of the machine. These are merely examples, confidence system 230 can generate any number of a variety of action signals used to control any number of operations of any number of machines including providing any number of displays, recommendations, or other indications on a variety of interfaces.

Confidence tracking logic 361 can track and detect a change in the confidence level value, which can indicate a variety of characteristics (e.g., degradation of the sensor, problems at the worksite, etc.). Based upon the change in confidence level value, confidence system 230 can generate, via action signal generator 356, a variety of action signals used to, for instance, control the operation of the machine, such as spraying system 102, or to provide displays, recommendations, or other indications (e.g., alerts). For example, based on a detected change in confidence level value, confidence system 230 can provide a display to an operator or user to change the substance application operation, such as switch between targeted substance application and broadcast application. For instance, a previously generated confidence value, high enough to perform a targeted substance application operation, may have caused confidence system or the operator or user to change to or maintain a targeted substance application operation, and, based on a change in the confidence value, such as the confidence level value dropping below a threshold confidence level value, the confidence system 230 can provide a recommendation to the operator or user that the confidence value is now too low for utilization of a targeted substance application.

Confidence tracking logic 361 can track and store (such as in data stores) the generated confidence level values across an operation, across a worksite, across a single pass on a worksite, across multiple seasons, as well as across various other time spans. Confidence map generator 357 can generate, based on the tracked confidence level values, a confidence map indicative of confidence level values generated across a worksite, for example, various confidence level values at various geographic locations on the worksite. Confidence map generator 357 can further indicate confidence level values at various locations on the worksite, such as locations where the confidence level value was relatively low (e.g., relative to a threshold, or relative to an average/median/etc. of confidence values across the worksite, relative to a historical confidence value etc.). The confidence map(s) generated by confidence map generator 357 can be provided, as a display, to an operator 262 on an operator interface 260 or to a remote user 270 on a user interface 268, used in the control of mobile machine 101, or stored in a data store for reference, such as data stores 208 or 302. These are merely examples, confidence map generator 357 can generate any number of a variety of different maps that indicate confidence level value characteristics, including, but not limited to, indicating various statistical summary characteristics of the confidence level value across a worksite, across an operation, across multiple worksites or operations, etc.

Confidence issue logic 362 can, based on various data, such as the data provided by data capture logic 352, and the confidence level or the confidence level value identify one or more issues adversely affecting the confidence level. For instance, the identification of characteristics, as confidence issues, causing the confidence level value to not satisfy a confidence value level threshold. For example, confidence issue logic can identify one or more environmental characteristics, machine characteristics, or sensor characteristics as confidence issues. By way of example, confidence issue logic 362 can identify that precipitation at the field is adversely affecting the confidence level, that the travel speed of the machine is adversely affecting the confidence level, or that the current orientation of a perception sensor is adversely affecting the confidence level. These are merely examples. Confidence issue logic 362 can generate a confidence issue output indicative of the one or more identified confidence issues. Based on the confidence issue output, a variety of actions signals can be generated by action signal generator 356, such as a control signal to adjust the speed of machine or to adjust a position or orientation of a perception sensor to adjust a line of sight of the perception sensor, as well as an action signal to provide an indication of the one or more identified confidence issues to an operator or user.

As illustrated in FIG. 4, confidence system 230 can also include threshold logic 358. Threshold logic 358 is configured to compare a generated confidence level value to a confidence level value threshold and generate a threshold output indicative of the comparison, or the difference between the generated confidence level value and the confidence level value threshold. The confidence level value threshold can be automatically generated by confidence system 230 (such as by machine learning logic 359), input by an operator or a user, or generated in various other ways. In one example, based on the threshold output, confidence system 230 can generate, via action signal generator 356, a variety of action signals used to, for instance, control the operation of the machine, such as spraying system 102, or to provide displays, recommendations, or other indications (e.g., alerts). By way of example, the confidence level value may be output as a percentage confidence level value (e.g., 0% - 100%), and the confidence level value threshold may be a corresponding percentage, such as 75%. In some examples, the confidence level value threshold may include a range, such as an acceptable deviation range. In the above of example of a percentage confidence level value, the confidence level value threshold can be 75% plus-or-minus 2%, such that the generated confidence level value can deviate up to 2%, for example, it must fall below 73% to be outside of the confidence level value threshold. Threshold logic 358 compares a generated confidence level value to the confidence level value threshold, and, upon a determination that the generated confidence level value does not satisfy the threshold, confidence system 230 can generate a variety of action signals. For example, an action signal to automatically control spraying system 102 to switch between a targeted substance application and a broadcast application. In another example, confidence system 230 can automatically provide an indication of the determination to an operator or user on an interface, such as an alert, display, recommendation. Additionally, it will be noted that the confidence level value threshold can be dynamically adjusted by confidence system 230, or the operator or user throughout the operation of the machine.

Additionally, the confidence level value threshold can be generated based on a number of considerations. For example, manufacturer recommendations, vendor recommendations, service provider recommendations, metric priorities selected by an operator or user, as well as a number of other considerations. In the example of metric priorities, for instance, the operator or user can input a desired volume of substance to be used across the field and threshold logic 358 can determine a confidence value threshold across the field to optimize the volume of substance used.

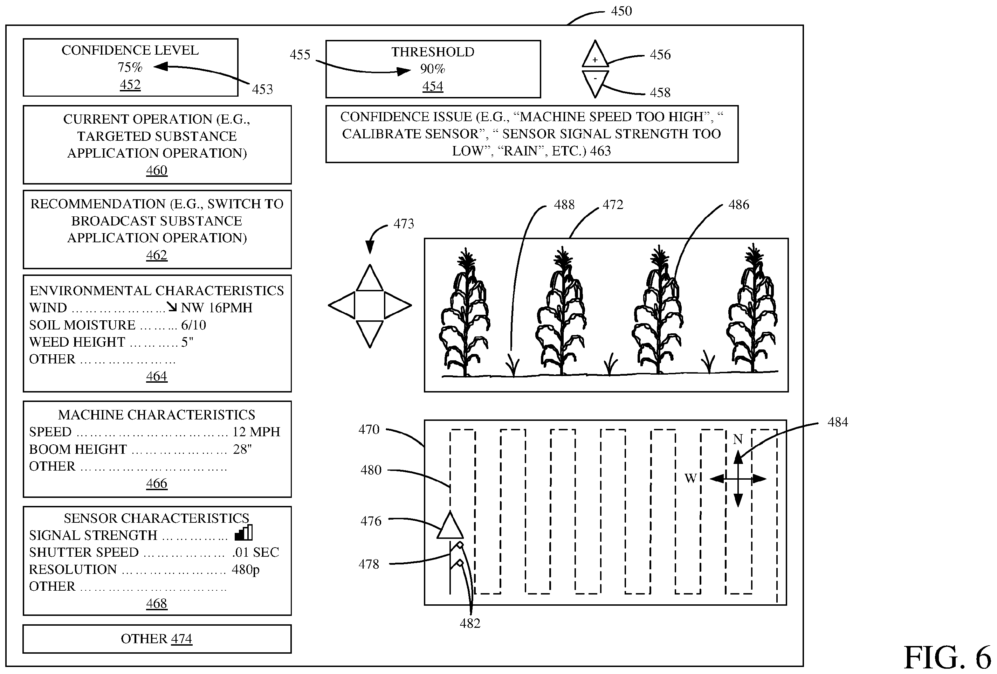

As illustrated, confidence determination system 230 can also include display generator 354. Display generator 354 can generate any number of displays, recommendations, or other indications (e.g., alerts) which can be provided to an operator or user on interface mechanisms by action signal generator 356, such as an action signal to control an interface, such as an operator interface 260 or user interface 268 to display the generated display, recommendation, or other indication, an example of which is described below in FIG. 6. The displays, recommendations, or other indications generated by display generator 354 can be based on the determined confidence level or generated confidence level value. For example, display generator 354 can generate one or more current operation indicator that indicate one or more desired task or operations being performed or to be performed by the machine; one or more recommendation indicators such as one or more recommendation indicators that indicate a recommendation to change an operation of the mobile machine; confidence level value indicators that indicate one or more confidence levels; confidence level value threshold indicators that indicate one or more confidence level thresholds; characteristics indicators that indicate one or more characteristics, such as environmental characteristics, machine characteristics, or sensor characteristics; confidence issue indicators that indicate one or more confidence issues; one or more actuatable elements; one or more map displays; one or more image or video displays, such as a video feed; as well as various other items. In some examples, the display generated by display generator 354 can include a number of different display elements including any combination of the display elements described herein.

As shown in FIG. 4, confidence determination system 230 can also include machine-learning logic 359. Machine learning logic 359 can include a machine learning model that can include machine learning algorithm(s), such as, but not limited to, memory networks, Bayes systems, decision tress, Eigenvectors, Eigenvalues and Machine Learning, Evolutionary and Genetic Algorithms, Expert Systems/Rules, Engines/Symbolic Reasoning, Generative Adversarial Networks (GANs), Graph Analytics and ML, Linear Regression, Logistic Regression, LSTMs and Recurrent Neural Networks (RNNSs), Convolutional Neural Networks (CNNs), MCMC, Random Forests, Reinforcement Learning or Reward-based machine learning, and the like.

Machine learning logic 359 can improve the determination of confidence levels and the generation of confidence level values, such as by improving the recognition of characteristics and conditions that affect the ability of the mobile machine to perform the desired task as well as by learning relationships between factors, conditions or characteristics that affect the ability of the mobile machine 101 to perform the desired task or operation. Machine learning logic 359 can also utilize a closed-loop style learning algorithm, such as one or more forms of supervised machine learning.

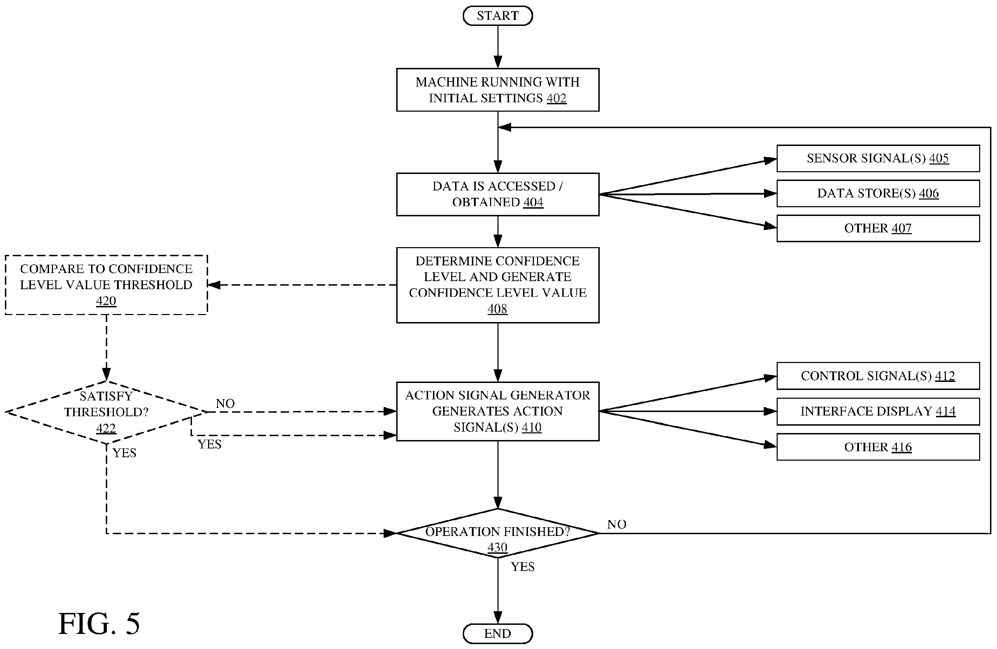

FIG. 5 is a flow diagram showing an example of the operation of the confidence system 230 shown in FIG. 4. The operation shown in FIG. 5 is one example of the operation of the system shown in FIG. 4 in determining a confidence level in the ability of a mobile machine to perform a desired task and generating a confidence level value indicative of the determined confidence level. It is to be understood that the operation can be carried out at any time or at any point throughout an operation of the mobile machine, or even if an operation of the mobile machine is not currently underway. Further, while the operation will be described in accordance with spraying system 102 performing an agricultural spraying operation on a field, it is to be understood that other machines with a confidence system 230, performing a variety of other machine operations, can be used as well.

It is initially assumed that sprayer 102 is running, as indicated by block 402. For instance, operator(s) 262 or remote user(s) 270 can provide initial machine settings for the operation of spraying system 102, for example, the substance application operation (e.g., broadcast application, targeted substance application, etc.), as well as various other machine settings. The operator or user can input these settings manually based upon his or her own prior experience and knowledge. The initial settings can also be made automatically by spraying system 102 itself. In another example, prior operation settings (e.g., previous year settings) or estimated settings can be downloaded from data store(s). Initial machine settings can be input in various other ways, including, but not limited to, through a touch screen or some other interface mechanism (e.g., input mechanism).

Processing proceeds at block 404 where data capture logic 352 of confidence system 230 obtains a variety of data, for example, data relating to a spraying operation to be performed by spraying system 102 on an agricultural surface. In one example, data capture logic obtains data generated by sensors, such as sensors 210 or sensors 304, as indicated by block 405, data from data stores, such as data stores 208 or data stores 302, as indicated by block 406, or from other sources, as indicated by block 407. Other sources can include external sources, such as an external weather station, as well as data input by an operator or a user. The data obtained from sensors at block 405 can include sensor data indicative of various characteristics of the environment of machine, such as characteristics of the field, data indicative of various characteristics of the machine, such as operating characteristics or machine settings, data indicative of various characteristics of the sensors, as well as a variety of other data. (e.g., characteristics of the agricultural surface). For instance, in the context of a spraying operation, the sensor data can be indicative of characteristics relative to weeds on the agricultural surface such as type, quantity, density, location, etc. This is merely an example; various other sensor data can be accessed at block 405.

The data obtained from data store(s) at block 406 can include data input by an operator or a user, historical data, stored sensor data, environmental data, system data, as well as a variety of other data, including, but not limited to the data described in FIG. 3.

Once the data is accessed (or otherwise obtained) at block 404, processing proceeds at block 408 where confidence system 230 determines a confidence level indicative of a confidence in the ability of spraying system 102 to perform a targeted substance application operation in which substance is applied to detected locations of weeds on the field and generates a confidence level value indicative of the determined confidence level. The determination of the confidence level is based on the data accessed (or otherwise obtained) at block 404.

In one example, once a determination of a confidence level and a generation of a confidence level value has been completed at block 408, processing proceeds at block 410 where action signal generator 356 generates one or more action signals. In one example, action signals can be used to control operation of one or more machines, such as control of one or more controllable subsystems 202 of agricultural spraying system 102, or controllable subsystems 308 of vehicles 300, as indicated by block 412, to provide displays, recommendations, or other indications (e.g., alerts) on an interface, such as operator interfaces 260 or user interfaces 268, as indicated by block 414, or in other ways as indicated by block 416. For example, a control signal can be generated and provided to controllable subsystems 202 of spraying system 102. For instance a control signal can be provided to spraying subsystem 214 to control one or more operating characteristics or machine settings of spraying subsystem, to switch between a targeted substance application and a broadcast substance application, such as the activation or deactivation of one or more of nozzles 112. In another example, a display, recommendation, or other indication can be provided to an interface to be presented to an operator or user, such as to an operator 262 on an operator interface 260 or to a remote user 270 on a user interface 268, including a display generated by display generator 354. For instance, a display indicative of the confidence level value, a recommendation to change an operating characteristic or machine setting of the spraying system 102, such as a recommendation to change between a targeted substance application and a broadcast substance application, as well as various other indications.

In another example, once a determination of a confidence level and generation of a confidence level value has been completed at block 408, processing proceeds at block 420 where the confidence level value is compared to a threshold confidence level value by confidence logic 358. The threshold confidence level value can be set by an operator or user, can be automatically set by confidence system 230, or can be set in other ways. Processing proceeds to block 422 where, based on the comparison, it is determined whether the generated confidence level value satisfies the confidence level value threshold. If, at block 422, it is determined that the generated confidence level value does not satisfy the confidence level value threshold, then processing proceeds at block 410 where action signal generator 356 generates one or more action signals.

If, at block 422, it is determined that the generated confidence value does satisfy the confidence level value threshold, then processing proceeds at block 430 where it is determined whether the operation is finished. Alternatively, if at block 422, it is determined that the generated confidence level value does satisfy the confidence level value threshold, then processing proceeds at block 410 where action signal generator 356 generates one or more action signals, for instance an action signal to provide a display on an interface of the generated confidence level value, the confidence level value threshold, or both.

If, at block 430, it is determined that the operation has not been finished, processing proceeds at block 404 where data continues to be accessed or otherwise obtained. If, at block 430, it is determined that the operation has finished, then processing ends.

FIG. 6 is a block diagram showing one example of an interface display that can be generated and provided by confidence system 230, such as to an operator 262 on an operator interface 262 or to a remote user 270 on a user interface 268. As illustrated in FIG. 6, interface display 450 includes confidence level indication 452, confidence level threshold indication 454, actuatable elements 456 and 458, current operation indication 460, recommendation indication 462, confidence issue indication, environmental characteristics indication 464, machine characteristics indication 466, sensor characteristics indication 468, map display 470, video feed 472, actuatable elements 473, and can include other items 474 as well. Confidence level indication 452, itself, includes confidence level value indication 453, illustratively shown as a percentage, though this need not be the case. Confidence level threshold indication 454, itself, includes confidence level value threshold indication 455, illustratively shown as a percentage, though this need not be the case, though generally the confidence level value and the confidence level value threshold will correspond to one another, in that they will generally be represented similarly. Map display 470, which can include a confidence map generated by confidence map generator 357, can, itself, include machine indicator 474, traveled path indication 476, prospective travel path indication 478, confidence level indicators 480, and compass rose 482. It will be noted that map display 470 can include more or fewer items as well.

Confidence level indication 452 displays the confidence level value generated by confidence system 230, as indicated by confidence level value indication 453. While illustratively shown as a percentage, it will be noted that the confidence level value can be represented in a variety of ways, such as numeric, such as percentages (e.g., 0% - 100%) or scalar values, gradation or scaled (e.g., A-F, "high, medium, low", 1-10, etc.), advisory (e.g., "change operation", "can't detect", "slow", etc.), as well as various other representations. The form of representation can be selectable or otherwise customizable by the operator or user, for example, based on an operator or user preference. Additionally, confidence level indication 452 displays a real-time or near-real time confidence level value and the confidence level value indication 453 can change dynamically throughout the operation of mobile machine 101.

Confidence level threshold indication 454 displays the confidence level threshold, as indicated by confidence level value threshold indication 455. While illustratively shown as a percentage, it will be noted that the confidence value level threshold can be represented in a variety of ways, such as numeric, such as percentages (e.g., 0% - 100%) or scalar values, gradation or scaled (e.g., A-F, "high, medium, low", 1-10, etc.), advisory (e.g., "change operation", "can't detect", "slow", etc.), as well as various other representations, though generally, the confidence level value and the confidence level value threshold will be represented similarly. The confidence level value that is set by confidence system 230 or by an operator or user, though the confidence level value threshold can be set in various other ways.

FIG. 6 also shows that interface display can include actuatable elements 456 and 458 which are actuatable by an operator or a user to adjust the confidence level value threshold. Though, in other examples, the confidence level threshold indication 454, itself, could be actuatable by an operator or user, such that actuation surfaces a digital keyboard or number pad, or other input element, to allow for adjustment of the confidence level value threshold

Interface display 450 can also include a current operation indication 460 and a recommendation indication 462. Current operation indication 460 displays an indication of the current desired task or operation of mobile machine 101, for instance, an indication that sprayer 102 is to perform or is currently performing a targeted spraying application. Recommendation indication 462 displays an indication of a recommendation based on the confidence level (or a comparison of the confidence level value and confidence level value threshold). For example, recommendation indication 462 can include an indication of a recommendation to change to a broadcast spraying application. In some examples, recommendation indication 462 can be an actuatable mechanism, actuatable by an operator or user to, for instance, implement the recommendation. For example, to have the mobile machine 101 implement the switch between a current operation and a recommended operation, such as, having sprayer 102 switch between a targeted substance application and a broadcast substance application, such as by the activation or deactivation of one or more of nozzles 112.

As illustrated, interface display 450 also includes a confidence issue indication 463. Confidence issue indication 463 displays an indication of one or more issues adversely affecting the confidence level, such as one or more characteristics adversely affecting the confidence level, as identified by confidence issue logic 362. As shown in FIG. 6, confidence issue indication 463 can display a representation, such as a word representation, of the confidence issues. For example, "machine speed too high", "calibrate sensor", "sensor signal strength too low", "rain", etc. It will be noted that the confidence issues can be represented in a variety of different ways, including, for example, numerical representations, symbols, lights, haptic or audible outputs.

It should be noted that current operation indication 460 can comprise a list of current desired tasks or operations of the mobile machine 101, such as tasks or operations of separate controllable subsystems, and confidence system 230 can determine a corresponding confidence level and generate a corresponding confidence level value for each of the desired tasks or operations in the list, which can be displayed as part of confidence level indication 452. Similarly, each particular confidence level value can have a corresponding confidence level value threshold which can be set in a variety of ways, such as automatically by confidence system 230 or by an operator or user. Each particular confidence level value threshold can be displayed as part of confidence level threshold indication 454. Further, confidence system 230 can display a separate recommendation corresponding to each of the particular confidence levels, each of the particular recommendations can be displayed as part of recommendation indication 462, for example an ordered list of recommendations. Additionally, confidence system 230 can display separate confidence issues corresponding to each of the particular confidence levels, each of the particular confidence issues can be displayed as part of confidence issue indication 463, for example an ordered list of confidence issues.

FIG. 6 also shows that interface display 450 can include various indications of characteristics, including, environmental characteristics indication 464, machine characteristics indication 466, and sensor characteristics indication 468. Environmental characteristics indication 464 can include indications of various characteristics of the environment in which mobile machine 101 is operating, for instance weather characteristics, characteristics of the field, as well as any number of other characteristics of the environment in which mobile machine 101 operates. As shown, environmental characteristics indication 464 indicates, as some examples, a current wind direction and speed, a soil moisture, a current average weed height, though environmental characteristics indication 464 can include any other number of indications of characteristics of the environment in which mobile machine 101 operates.

Machine characteristics indication 466 can include indications of various characteristics of mobile machine 101, such as operating characteristics and machine settings, as well as any number of other machine characteristics. As shown, machine characteristics indication 466 indicates, as some examples, a current speed of mobile machine 101, a current boom height, such as a current height of the boom from the surface of the field, though machine characteristics indication 466 can include any number of other indications of machine characteristics.

Sensor characteristics indication 468 can include indications of various characteristics of the sensors of mobile machine 101 or vehicles 300. As shown, sensor characteristics indication 468 indicates, as some examples, a current signal strength of a sensor, such as a position sensor 238, a current shutter speed setting, such as a shutter speed setting of perception sensor 128, 556, or 609, and a current resolution setting, such as a resolution setting of perception sensor 128, 556, or 609, though sensor characteristics indication 468 can include any number of other indications of sensor characteristics.

As shown, interface display 450 can also include map display 470. Map display 470, which can include a confidence map generated by confidence map generator 357, includes a machine indicator 476, traveled path indicator 478, prospective travel path indicator 480, confidence level indicators 482, and compass rose 484. Machine indicator 476 provides a representation of the heading and location of mobile machine 101 on the agricultural surface, such as a field, it is operating on. For instance, as shown on map display 470, mobile machine 101 is in the southwest corner of the field and is currently heading north.

Traveled path indicator 478 provides a representation of the path that mobile machine 101 has so far traveled along on the field, while prospective travel path indicator 480 provides a representation of a prospective route, such as an operator or user commanded route or a route generated by control system 204. As shown in FIG. 6, traveled path indicator 478 is represented by a solid line while prospective travel path indicator 480 is represented by a dashed line so as to provide an observable differentiation between the two for the operator or user, though this need not be the case. Traveled path indicator 478 and prospective travel path indicator 480 can be represented in any number of ways, and can be differentiated in any number of ways, for example, different colors, different line designs, as well as various other stylistic differences. In some examples, where the mobile machine 101 deviates from a commanded or recommended route, such deviation can be indicated by simultaneous display of both a traveled path indicator 478 and a prospective travel path indicator 480 in areas of the field where the mobile machine 101 deviated from the commanded or recommended route.

FIG. 6 also shows that map display 470 includes confidence level indicators 482, illustratively shown as flags placed at various locations along the traveled path of mobile machine 101, indicate confidence level values at various locations across a worksite. In some examples, confidence level indicators 482 indicate areas of the field where the confidence level value did not satisfy the confidence level value threshold. In other examples, confidence level indicators 482 can indicate areas of the field where an operation of mobile machine 101 was switched, such as areas of the field where the operation of sprayer 102 was switched from a targeted substance application operation to a broadcast substance application operation. In this way, the areas of the field can be stored and referenced later, such as, when analyzing yield values for different areas of the field. These are merely examples, indicators 482 can indicate a variety of characteristics or conditions. Map display 470 further includes compass rose 484 to indicate the disposition of the field and items on map display 470 or the field relative to North, South, East, and West.

As illustrated, interface display 450 can also include video feed 472. In one example, video feed 472 shows a real-time or near real-time video feed of an area of the field around mobile machine 101, such as an area of the field in front of mobile machine 101. In some examples, video feed 472 can be generated based on signals received from perception sensors 128, 565, or 609. In other examples, video feed 472 can be a dynamic still frame display that shows, for instance, a most recent image captured by a perception sensor, or an image corresponding to the confidence level value indication 454 currently being displayed on interface display 450. As shown, video feed 472 can display an image or video depicting crops 486 and weeds 488 on the field. In some examples, interface display 450 can include actuatable mechanisms 473 which are actuatable by an operator or a user to adjust various settings of the perception sensor generating video feed 472. For instance, a zoom, a resolution, shutter speed, flash, as well as various other settings. As shown in FIG. 6, actuatable elements 473 are actuatable by an operator or user to adjust a point of view of the perception sensor generating video feed 472, the adjustment of which can be correspondingly represented by the image displayed on video feed 472. As illustrated, actuatable elements 473 are actuatable to adjust the point of view of the perception "up", "down", "left" or "right", though the point of view of the perception sensor can be adjusted in various other directions. Actuation of actuatable elements 473, by a user or operator, can cause the generation of one or more control signals, by control system 204, such as a control signal provided to an actuator corresponding to the perception sensor generating video feed 472 to adjust a position or orientation of perception sensor 472 to adjust a point of view of the perception sensor.

Interface display 450 can include any number of other items, as indicated by 474, such as various other display elements, indicators, and actuatable mechanisms.

While a specific placement of display elements is shown in FIG. 6, it is to be understood that the display elements can be arranged in any number of ways. Additionally, while specific display elements are shown in FIG. 6, it will be noted that more or fewer elements can be displayed on interface display 450, or any number of other interface displays. Further, while FIG. 6 shows various display elements of certain size, it is to be understood, that the display elements can be of any of a wide variety of sizes, and in some examples, the sizes of display elements can be adjusted by an operator or user. Also, it is to be understood that the various display elements can stylized in a variety of ways, such as, a variety of fonts, a variety of colors, as well as any other number of stylizations.

As discussed previously, while some examples described herein proceed in the context of specific machines, for example spraying system 102, it is to be understood that the various systems and methods are applicable and can be used in combination with any number of machines. FIGS. 7-10 show examples in which machine 101 comprises some examples of other machines with which the various systems and methods described herein are applicable. While some additional machines are shown in FIGS. 7-10, it will be noted that this is not an exhaustive list of the machines with which the various systems and methods described herein are applicable. It will be noted that while the examples in FIGS. 7-10 proceed in the context of specific agricultural machines, for example an agricultural combine harvester, an agricultural planter, or agricultural tillage equipment, it will be noted that the various systems and methods described herein are applicable to and can be used in combination with any number of machines, including any number of agricultural machines, forestry machines, construction machines, or turf management machines, to name a few. Additionally, while the examples in FIGS. 7-10 proceed in the context of specific sensors or sensor systems along with specific controls, it will be noted that the various systems and methods described herein are applicable to and can be used in combination with any number of sensors or sensor systems as well as any number of controls. Furthermore, while the examples in FIGS. 7-10 proceed in the context of specific operations, such as a harvesting operation or a planting operation, it will be understood that the systems and methods described herein are applicable to and can be used in combination with any number of operations performed by any number of different types machines. Further, it is to be understood that confidence system 230 (of control system 204) can be applicable to and used in combination with any number of different types of machines performing any number of a variety of operations.

FIG. 7 illustrates an example in which machine 101 comprises an agricultural harvester 501 (shown in FIG. 7 as a combine harvester, though various other harvesters are also contemplated). It can be seen in FIG. 7 that agricultural harvester 501 illustratively includes an operator compartment 503, which can have a variety of different interface mechanisms for controlling agricultural harvester 501 or displaying a variety of information. Operator compartment 503 can include operator interface mechanisms that allow an operator to control and manipulate agricultural harvester 501. The operator interface mechanisms in operator compartment 503 can be any of a wide variety of different types of mechanisms. For instance, they can include input mechanisms such as a steering wheel, levers, joysticks, buttons, pedals, switches, etc. In addition, operator compartment 503 may include one or more operator interface display devices, such as one or more monitors, or mobile devices that are supported within operator compartment 503. In that case, the operator interface mechanisms can also include user actuatable elements displayed on the display devices, such as icons, links, buttons, etc. The operator interface mechanisms can include one or more microphones where speech recognition is provided on agricultural harvester 501. They can also include audio interface mechanisms (such as speakers), one or more haptic interface mechanisms or a wide variety of other operator interface mechanisms. The operator interface mechanisms can include other output mechanisms as well, such as dials, gauges, meter outputs, lights, audible or visual alerts or haptic outputs, etc.

Agricultural harvester 501 includes a set of front-end equipment forming a cutting platform 502 that includes a header 504 having a cutter generally indicated at 506. It can also include a feeder house 508, a feed accelerator 509, and a thresher generally indicated at 511. Thresher 511 illustratively includes a threshing rotor 512 and a set of concaves 114. Further, agricultural harvester 501 can include a separator 516 that includes a separator rotor. Agricultural harvester 501 can include a cleaning subsystem (or cleaning shoe) 518 that, itself, can include a cleaning fan 520, a chaffer 522 and a sieve 524. The material handling subsystem in agricultural harvester 501 can include (in addition to a feeder house 508 and feed accelerator 509) discharge beater 526, tailings elevator 528, clean grain elevator 530 (that moves clean grain into clean grain tank 532) as well as unloading auger 534 and spout 536. Harvester 501 can further include a residue subsystem 538 that can include chopper 540 and spreader 542. Harvester 501 can also have a propulsion subsystem that includes an engine (or other power source) that drives ground engaging elements 544 (such as wheels, tracks, etc.). It will be noted that harvester 501 can also have more than one of any of the subsystems mentioned above (such as left and right cleaning shoes, separators, etc.).

As shown in FIG. 7, header 504 has a main frame 507 and an attachment frame 510. Header 504 is attached to feeder house 508 by an attachment mechanism on attachment frame 510 that cooperates with an attachment mechanism on feeder house 508. Main frame 507 supports cutter 506 and reel 505 and is movable relative to attachment frame 510, such as by an actuator (not shown). Additionally, attachment frame 510 is movable, by operation of actuator 549, to controllably adjust the position of front-end assembly 102 relative to the surface, such as field 110, over which harvester 101 travels in the direction indicated by arrow 546, and thus controllably adjust a position of header 504 above the surface. In one example, main frame 507 and attachment frame 510 can be raised and lowered together to set a height of cutter 506 above the surface over which harvester 501 is traveling. In another example, main frame 507 can be tilted relative to attachment frame 510 to adjust a tilt angle with which cutter 506 engages the crop on the surface. Also, in one example, main frame 507 can be rotated or otherwise moveable relative to attachment frame 510 to improve ground following performance. The movement of main frame 507 together with attachment frame 510 can be driven by actuators (such as hydraulic, pneumatic, mechanical, electromechanical, or electrical actuators, as well as various other actuators) based on operator inputs or automated inputs, such as a control signal.

In operation, and by way of overview, the height of header 504 is set and harvester 501 illustratively moves over a field in the direction indicated by arrow 546. As it moves, header 504 engages the crop to be harvested and gather it towards cutter 506. After it is cut, the crop can be engaged by reel 505 that moves the crop to a feeding system, such as feeding tracks. The feeding system move the crop to the center of header 504 and then through a center feeding system in feeder house 508 toward feed accelerator 509, which accelerates the crop into thresher 511. The crop is then threshed by rotor 512 rotating the crop against concaves 514. The threshed crop is moved by a separator rotor in separator 516 where some of the residue is moved by discharge beater 526 toward a residue subsystem. It can be chopped by a residue chopper 540 and spread on the field by spreader 542. In other implementations, the residue is simply dropped in a windrow, instead of being chopped and spread.

Grain falls to cleaning shoe (or cleaning subsystem) 518. Chaffer 522 separates some of the larger material from the grain, and sieve 524 separates some of the finer material from the clean grain. Clean grain falls to an auger in clean grain elevator 530, which moves the clean grain upward and deposits it in clean grain tank 532. Residue can be removed from the cleaning shoe 518 by airflow generated by cleaning fan 520. That residue can also be moved rearwardly in harvester 501 toward the residue handling subsystem 538.

Tailings can be moved by tailings elevator 528 back to thresher 510 where they can be re-threshed. Alternatively, the tailings can also be passed to a separate re-threshing mechanism (also using a tailings elevator or another transport mechanism) where they can re-threshed as well.

FIG. 7 also shows that, in one example, harvester 501 can include a variety of sensors 580, some of which are illustratively shown. For example, harvester 501 can include one or more ground speed sensors 547, one or more separator loss sensors 548, a clean grain camera 550, one or more cleaning shoe loss sensors 552, and one or more perception sensors 556 (such as a camera and an image processing system). Ground speed sensors 547 illustratively sense the travel speed of harvester 501 over the ground. This can be done by sensing the speed of rotation of ground engaging elements 544, the drive shaft, the axle, or various other components. The travel speed can also be sensed by a positioning system, such as a global positioning system (GPS), a dead-reckoning system, a LORAN system, or a wide variety of other systems or sensors that provide an indication of travel speed. A perception sensor 556 is illustratively mounted to and senses the field (and characteristics thereof) in front of, to the side of, or behind harvester 501 (relative to direction of travel 546) and generates a sensor signal (e.g., an image) indicative of those characteristics. For example, perception sensor 556 can generate a sensor signal indicative of characteristics of the vegetation on the field ahead of or around combine 501. In some examples, the point of view of sensor 556 can be adjusted, for instance, such that sensor 556 is provided with up to 360 degrees of perspective around harvester 501. While shown at a specific location in FIG. 7, it will be noted that perception sensor 556 can be mounted to various locations on harvester 501 and is not limited to the depiction shown in FIG. 7. Additionally, while only a single perception sensor 556 is shown, it will be noted that numerous perception systems can be used mounted any number of locations within harvester 501.

Cleaning shoe loss sensors 552 illustratively provide an output signal indicative of the quantity of grain loss by both the right and left sides of the cleaning shoe 518. In one example, sensors 552 are strike sensors which count grain strikes per unit of time (or per unit of distance traveled) to provide an indication of the cleaning shoe grain loss. The strike sensors for the right and left sides of the cleaning shoe can provide individual signals, or a combined or aggregated signal. It will be noted that sensors 552 can comprise on a single sensor as well, instead of separate sensors for each shoe.

Separator loss sensors 548 provide signals indicative of grain loss in the left and right separators. The sensors associated with the left and right separators can provide separate grain loss signals or a combined or aggregate signal. This can be done using a wide variety of different types of sensors as well. It will be noted that separator loss sensors 548 may also comprise only a single sensor, instead of separate left and right sensors.

It will be appreciated, and as will be discussed further herein, sensors 580 can include a variety of other sensors not illustratively shown in FIG. 7. For instance, they can include a residue setting sensor that is configured to sense whether harvester 501 is configured to chop the residue, drop a windrow, etc. They can include cleaning shoe fan speed sensors that can be configured proximate fan 520 to sense the speed of the fan. They can include a threshing clearance sensor that senses clearance between the rotor 512 and concaves 514. They can include a threshing rotor speed sensor that senses a rotor speed of rotor 512. They can include a chaffer clearance sensor that senses the size of openings in chaffer 522. They can include a sieve clearance sensor that senses the size of openings in sieve 524. They can include a material other than grain (MOG) moisture sensor that can be configured to sense the moisture level of the material other than grain that is passing through harvester 501. They can include machine settings sensors that are configured to sense the various configured settings on harvester 501. They can also include machine orientation sensors that can be any of a wide variety of different types of sensors that sense the orientation of harvester 501, or components thereof. They can include crop property sensors that can sense a variety of different types of crop properties, such as crop type, crop moisture, and other crop properties. They can also be configured to sense characteristics of the crop as they are being processed by harvester 501. For instance, they can sense grain feed rate, as it travels through clean grain elevator 520. They can sense mass flow rate of grain through elevator 530 or provide other output signals indicative of other sensed variables. They can include soil property sensors that can sense a variety of different types of soil properties, including, but not limited to, soil type, soil compaction, soil moisture, soil structure, among others.

Some additional examples of the types of sensors that can be, but are not limited to, a variety of position sensors that can generate sensor signals indicative of a position of harvester 501 on the field over which harvester 501 travels or a position of various components of harvester 501, such as header 504, relative to, for example, the field over which harvester 501 travels or relative to other components of harvester 501. These are merely examples.

As shown in FIG. 7, harvester 501 can also include control system 204. Control system 204 can be on harvester 501, or elsewhere or distributed across various locations (e.g., remote computing system 266).

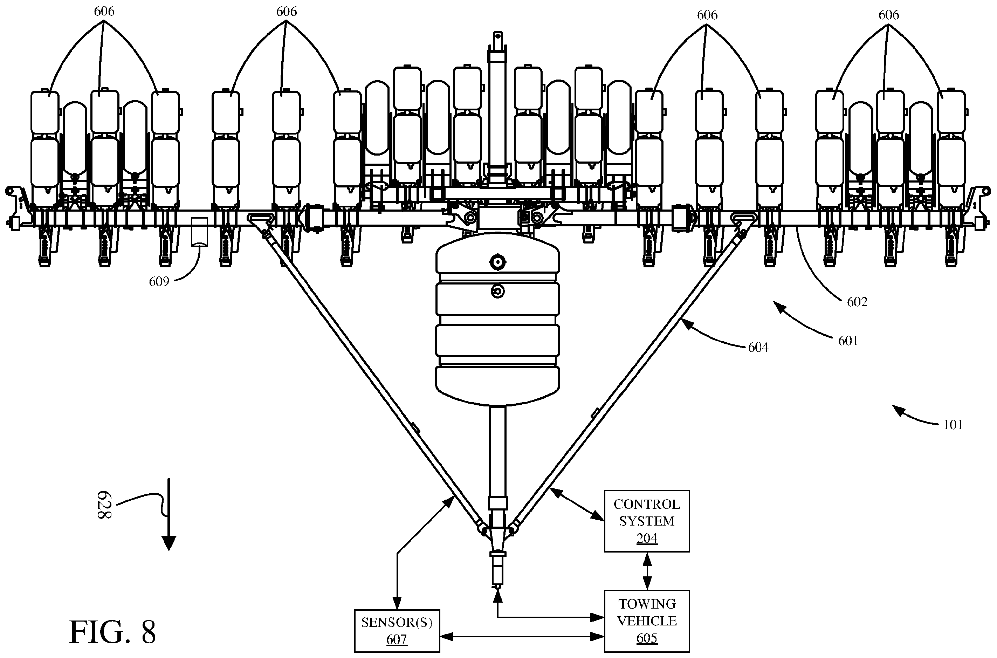

FIG. 8 illustrates an example in which machine 101 comprises an agricultural planter 601. Planter 601 illustratively includes a toolbar 602 that is part of a frame 604. FIG. 8 also shows that a plurality of row units 606 are mounted to toolbar 602. Planter 601 can be towed behind another machine 605, such as a tractor, which can have ground engaging elements (such as wheels or tracks) that are driven by a propulsion system to drive movement of towing machine 605, and in turn drive movement of planter 601. It will also be noted that towing vehicle 605 can include an operator compartment, which can have a variety of different operator interface mechanisms for controlling machine planter 601 (as well as towing vehicle 605).

As shown in FIG. 8, planter 601 can also include control system 204 and one or more sensors 607. Control system 204 can be on towing vehicle 605 or on planter 601, or elsewhere or distributed across various locations (e.g., remote computing system 266). Sensors 607 can include any number of sensors configured to detect any number of characteristics. Sensors 607 can be on towing vehicle 605 or on planter 601. In the example shown in FIG. 8, sensors 607 can include one or more perception sensors 609 (such as a camera and an image processing system). Perception sensor 609 is mounted to and illustratively senses the field (and characteristics thereof) in front of, to the side of, or behind planter 601 (relative to direction of travel 628) and generates a sensor signal, such as an image, indicative of those characteristics. In some examples, the point of view of perception sensor 609 can be adjusted, for instance, such that sensor 609 is provided with up to 360 degrees of perspective around planter 601.

While shown at a specific location in FIG. 8 (mounted to toolbar 602), it will be noted that perception sensor 609 can be mounted to various locations on planter 601 or towing vehicle 605 and is not limited to the depiction shown in FIG. 8. Additionally, while only a single perception sensor 609 is shown, it will be noted that numerous perception sensors can be used and mounted to any number of locations within planter 601 or towing vehicle 605.

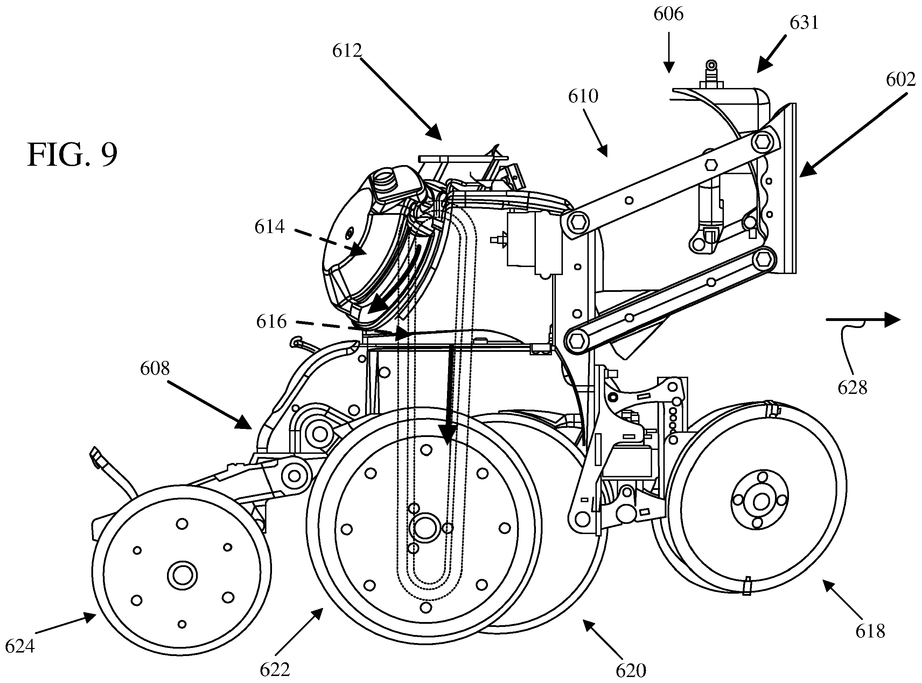

FIG. 9 is a side view showing one example of a row unit 606 in more detail. FIG. 9 shows that each row unit 606 illustratively has a frame 608. Frame 608 is illustratively connected to toolbar 602 by a linkage shown generally at 610. Linkage 610 is illustratively mounted to toolbar 602 so that it can move upwardly and downwardly (relative to toolbar 602).

Row unit 606 also illustratively has a seed hopper 612 that stores seed. The seed is provided from hopper 612 to a seed metering system 614 that meters the seed and provides the metered seed to a seed delivery system 616 that delivers the seed from the seed metering system 614 to the furrow or trench generated by the row unit. In one example, seed metering system 614 uses a rotatable member, such as a disc or concave-shaped rotating member, and an air pressure differential to retain seed on the disc and move it from a seed pool of seeds (provided from hopper 612) to the seed delivery system 616. Other types of meters can be used as well.

Row unit 606 can also include a row cleaner 618, a furrow opener 620, a set of gauge wheels 622, and a set of closing wheels 624. It can also include an additional hopper that can be used to provide additional material, such as a fertilizer or another chemical.

In operation, as row unit 606 moves in the direction generally indicated by arrow 628, row cleaner 618 generally cleans the row ahead of the opener 620 to remove plant debris from the previous growing season and the opener 620 opens a furrow in the soil. Gauge wheels 622 illustratively control a depth of the furrow, and seed is metered by seed metering system 614 and delivered to the furrow by seed delivery system 616. Closing wheels 624 close the trench over the seed. A downforce generator 631 can also be provided to controllably exert downforce to keep the row unit in desired engagement with the soil.

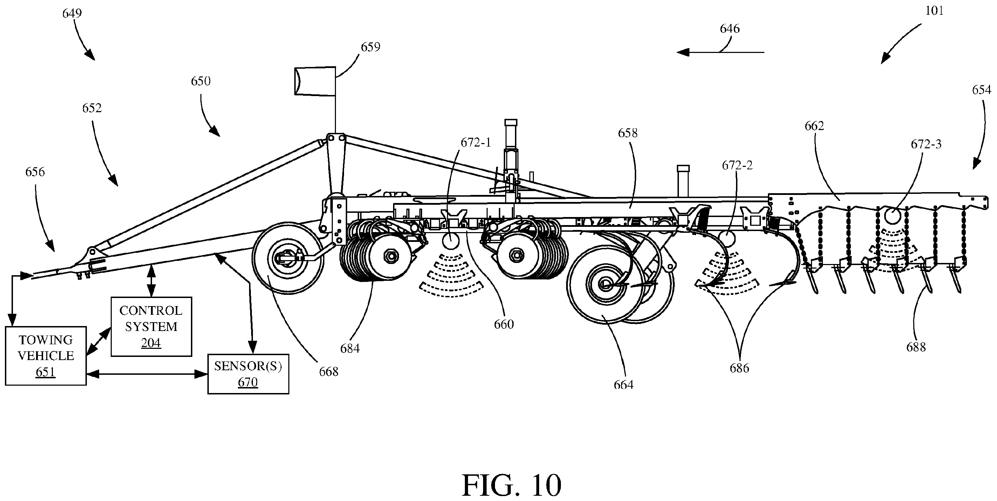

FIG. 10 illustrates an example in which agricultural machine 101 comprises an agricultural tillage machine 649. The tillage machine 649 may include a tillage implement 650 and a towing vehicle 651. The tillage implement 650 may include any number of tillage implements but is illustratively shown as a field cultivator. The tillage implement 650 may include multiple sections, or it may include only a single section. The implement 650 may include a hitch assembly 656 at its front end 652 for coupling to a towing machine 651 (e.g., a tractor). The implement 659 may include a main frame 658 that is coupled to the hitch assembly 656. The implement 650 may also include one or more sub-frames. In FIG. 10, for example, a first sub-frame 660 is disposed towards the front end 652 of the implement 650, while a second sub-frame 662 is disposed towards a rear end 654 of the implement 650.

The frames may be supported by one or more wheels 664, 668. In this embodiment, one or more front wheels 668 support the implement 650 at its front end 652, and one or more rear wheels 664 supports the rear end 654 of the implement 650. Moreover, a first work tool 684 (shown as a disk assembly) may be coupled to the first sub-frame 660, a second work tool 686 (shown as ripper shanks with sweeps coupled thereto) may be coupled to the main frame 658, and a third work tool 688 (shown as a harrow) may be coupled to the second sub-frame 662. In other examples, implement 650 can include more or less tools, as well as other types of tools, coupled at various locations.

As shown in FIG. 10, agricultural tillage machine 649 can also include control system 204 and one or more sensors 670. Control system 204 can be on towing vehicle 651 or on tillage implement 650, or elsewhere, or distributed across various location (e.g., remote computing system 266). Sensors 670 can include any number of sensors configured to detect any number of characteristics. Sensors 670 can be on towing vehicle 651 or on tillage implement 650. In the example shown in FIG. 10, sensors 670 can include one or more perception sensors 659 (such as a camera and an image processing system) and sensors 672 (shown as 672-1 to 672-3). A first sensor 672-1 is coupled to the first sub-frame 610 and is configured to detect the distance between the first sub-frame 610 and the underlying surface. Similarly, a second sensor 672-2 is coupled to the main frame 658 and is configured to detect the distance between the main frame 658 and the underlying surface. Further, a third sensor 672-3 is coupled to the second sub-frame 662 and is configured to detect the distance between the second sub-frame 662 and the underlying surface. In some instances, the sub-frames may be coupled to and below the main frame. Thus, the distance between the sub-frame first work tool 684 and the underlying surface may be different than the distance between the second work tool 686 and the underlying surface. The same may be true with respect to the third work tool 688. In other examples, alternatively, or in addition to sensors 672, implement 650 can include other types of sensors configured to generate a sensor signal indicative of a position of the work tools or of the frames relative to the ground, such as a potentiometer, or other sensor configured to detect a position of the wheels 664 or 668 (which may be actuatable) relative to one or more of the frames. Sensors 672 can be any of a number of suitable sensors, including, but not limited to, ultrasonic, radar, lidar, optical, or other sensors.

The one or more perception sensors 659 (such as a camera and an image processing system) can be mounted to implement 650 and/or towing vehicle 651 and illustratively sense the field (and characteristics thereof) in front of, to the side of, or behind implement 650 and/or towing vehicle 651 (relative to direction of travel 646) and generate sensor signals, such as images, indicative of those characteristics. In some examples, the point of view of the one or more perception sensors 659 can be adjusted, for instance, such that sensor 659 is provided with up to 360 degrees of perspective around implement 650. While shown at a specific location in FIG. 10, it will be noted that perception sensor 659 can be mounted to various locations on implement 650 or on the towing vehicle 651 that pulls implement 650 and is not limited to the depiction shown in FIG. 10. Additionally, while only a single perception sensor 659 is shown, it will be noted that numerous perception sensors can be used and mounted to any number of locations within implement 650 and/or towing vehicle 651.

In operation, and by way of overview, as tillage implement 650 moves in the direction generally indicated by arrow 646, the one or more work tools on tillage implement 650, such as work tools 684, 686, and 688, engage the field and may be set to a depth of engagement within the field, such that the work tools penetrate the field. The work tools are pulled across the field and/or through the field to till the field, such as by digging, stirring, overturning and smoothing the soil.

The present discussion has mentioned processors and servers. In one embodiment, the processors and servers include computer processors with associated memory and timing circuitry, not separately shown. They are functional parts of the systems or devices to which they belong and are activated by and facilitate the functionality of the other components or items in those systems.

Also, a number of user interface displays have been discussed. They can take a wide variety of different forms and can have a wide variety of different user actuatable input mechanisms disposed thereon. For instance, the user actuatable input mechanisms can be text boxes, check boxes, icons, links, drop-down menus, search boxes, etc. They can also be actuated in a wide variety of different ways. For instance, they can be actuated using a point and click device (such as a track ball or mouse). They can be actuated using hardware buttons, switches, a joystick or keyboard, thumb switches or thumb pads, etc. They can also be actuated using a virtual keyboard or other virtual actuators. In addition, where the screen on which they are displayed is a touch sensitive screen, they can be actuated using touch gestures. Also, where the device that displays them has speech recognition components, they can be actuated using speech commands.

A number of data stores have also been discussed. It will be noted they can each be broken into multiple data stores. All can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, components and/or logic. It will be appreciated that such systems, components and/or logic can be comprised of hardware items (such as processors and associated memory, or other processing components, some of which are described below) that perform the functions associated with those systems, components and/or logic. In addition, the systems, components and/or logic can be comprised of software that is loaded into a memory and is subsequently executed by a processor or server, or other computing component, as described below. The systems, components and/or logic can also be comprised of different combinations of hardware, software, firmware, etc., some examples of which are described below. These are only some examples of different structures that can be used to form the systems, components and/or logic described above. Other structures can be used as well.

It will also be noted that the confidence value can be output to the cloud.

The present discussion has mentioned processors and servers. In one embodiment, the processors and servers include computer processors with associated memory and timing circuitry, not separately shown. They are functional parts of the systems or devices to which they belong and are activated by and facilitate the functionality of the other components or items in those systems.

Also, a number of user interface displays have been discussed. They can take a wide variety of different forms and can have a wide variety of different user actuatable input mechanisms disposed thereon. For instance, the user actuatable input mechanisms can be text boxes, check boxes, icons, links, drop-down menus, search boxes, etc. They can also be actuated in a wide variety of different ways. For instance, they can be actuated using a point and click device (such as a track ball or mouse). They can be actuated using hardware buttons, switches, a joystick or keyboard, thumb switches or thumb pads, etc. They can also be actuated using a virtual keyboard or other virtual actuators. In addition, where the screen on which they are displayed is a touch sensitive screen, they can be actuated using touch gestures. Also, where the device that displays them has speech recognition components, they can be actuated using speech commands.

A number of data stores have also been discussed. It will be noted they can each be broken into multiple data stores. All can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, components and/or logic. It will be appreciated that such systems, components and/or logic can be comprised of hardware items (such as processors and associated memory, or other processing components, some of which are described below) that perform the functions associated with those systems, components and/or logic. In addition, the systems, components and/or logic can be comprised of software that is loaded into a memory and is subsequently executed by a processor or server, or other computing component, as described below. The systems, components and/or logic can also be comprised of different combinations of hardware, software, firmware, etc., some examples of which are described below. These are only some examples of different structures that can be used to form the systems, components and/or logic described above. Other structures can be used as well.

It will also be noted that the confidence value can be output to the cloud.

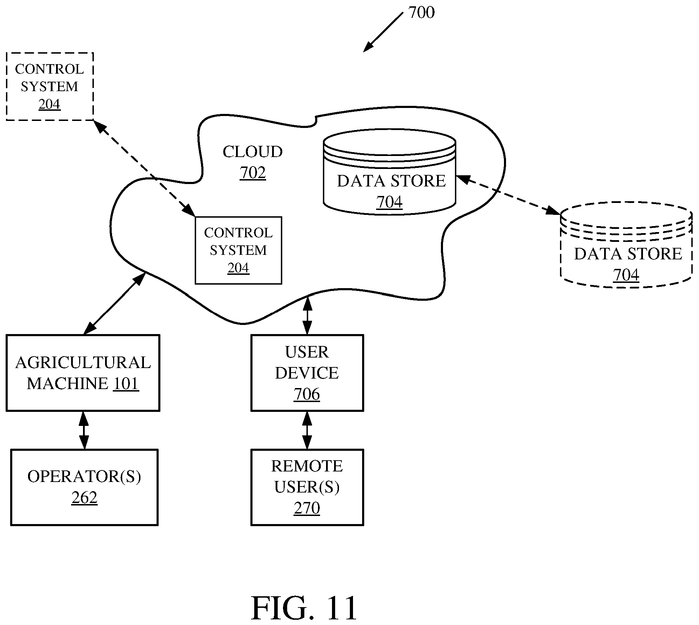

FIG. 11 is a block diagram of machine 101, shown in FIG. 2, except that it communicates with elements in a remote server architecture 700. In an example embodiment, remote server architecture 700 can provide computation, software, data access, and storage services that do not require end-user knowledge of the physical location or configuration of the system that delivers the services. In various embodiments, remote servers can deliver the services over a wide area network, such as the internet, using appropriate protocols. For instance, remote servers can deliver applications over a wide area network and they can be accessed through a web browser or any other computing component. Software or components shown in FIG. 2 as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, they can be provided from a conventional server, or they can be installed on client devices directly, or in other ways.

In the embodiment shown in FIG. 11, some items are similar to those shown in FIG. 2 and they are similarly numbered. FIG. 11 specifically shows that control system 204 can be located at a remote server location 702. Therefore, machine 101 (e.g., spraying system 102, harvester 501, planter 601, tillage machine 649, etc.), operator(s) 262, or remote user(s) 270 access those systems through remote server location 702.

FIG. 11 also depicts another embodiment of a remote server architecture. FIG. 11 shows that it is also contemplated that some elements of FIG. 2 are disposed at remote server location 702 while others are not. By way of example, data store 704, which can comprise a third-party system, can be disposed at a location separate from location 702, and accessed through the remote server at location 702. Regardless of where they are located, they can be accessed directly by machine 101 and/or operator(s) 262, as well as one or more remote user(s) 270 (via user device 706), through a network (either a wide area network or a local area network), they can be hosted at a remote site by a service, or they can be provided as a service, or accessed by a connection service that resides in a remote location. Also, the data can be stored in substantially any location and intermittently accessed by, or forwarded to, interested parties. For instance, physical carriers can be used instead of, or in addition to, electromagnetic wave carriers. In such an embodiment, where cell coverage is poor or nonexistent, another mobile machine (such as a fuel truck) can have an automated information collection system. As the machine comes close to the fuel truck for fueling, the system automatically collects the information from the machine using any type of ad-hoc wireless connection. The collected information can then be forwarded to the main network as the fuel truck reaches a location where there is cellular coverage (or other wireless coverage). For instance, the fuel truck may enter a covered location when traveling to fuel other machines or when at a main fuel storage location. All of these architectures are contemplated herein. Further, the information can be stored on the machine until the machine enters a covered location. The machine, itself, can then send the information to the main network.

It will also be noted that the elements of FIG. 2, or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

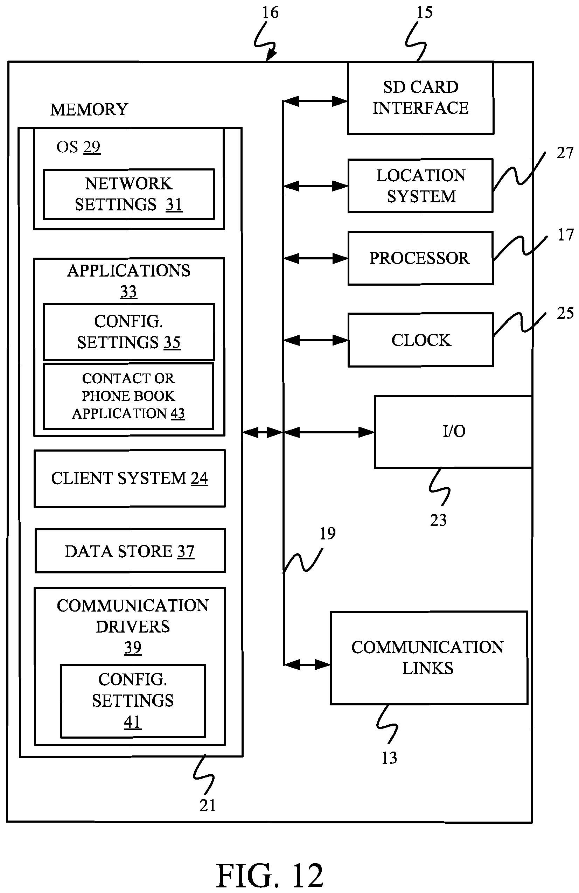

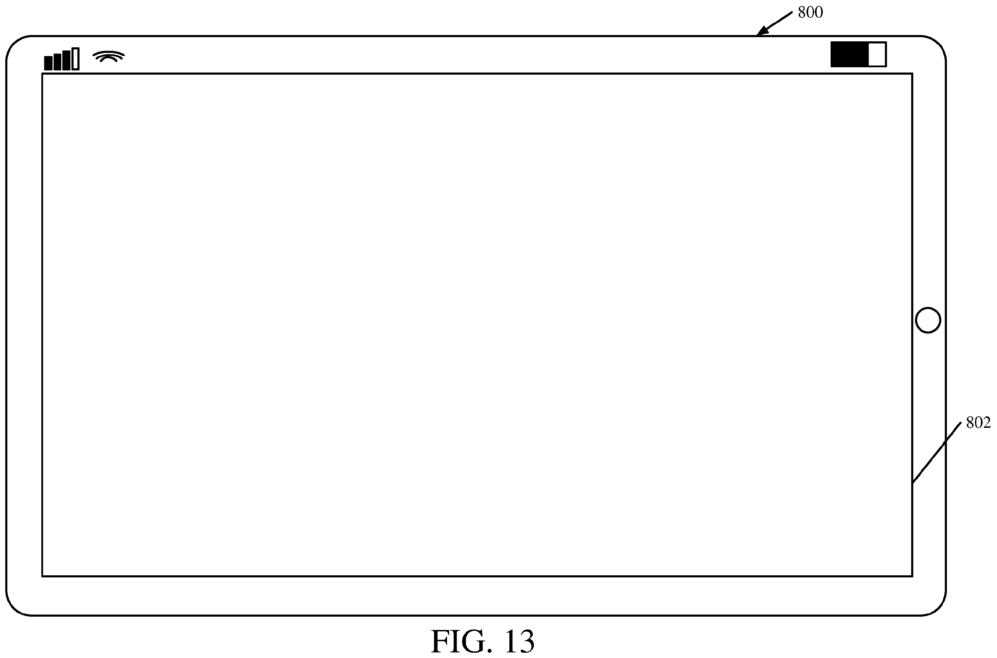

FIG. 12 is a simplified block diagram of one illustrative embodiment of a handheld or mobile computing device that can be used as a user's or client's hand held device 16, in which the present system (or parts of it) can be deployed. For instance, a mobile device can be deployed in the operator compartment of machine 101 for use in generating, processing, or displaying the confidence value, as well as a variety of other information. FIGS. 13-14 are examples of handheld or mobile devices.

FIG. 12 provides a general block diagram of the components of a client device 16 that can run some components shown in FIG. 2, that interacts with them, or both. In the device 16, a communications link 13 is provided that allows the handheld device to communicate with other computing devices and under some embodiments provides a channel for receiving information automatically, such as by scanning. Examples of communications link 13 include allowing communication though one or more communication protocols, such as wireless services used to provide cellular access to a network, as well as protocols that provide local wireless connections to networks.

Under other embodiments, applications can be received on a removable Secure Digital (SD) card that is connected to an interface 15. Interface 15 and communication links 13 communicate with a processor 17 (which can also embody processor(s) 232, 274, or 310 from FIG. 2) along a bus 19 that is also connected to memory 21 and input/output (I/O) components 23, as well as clock 25 and location system 27.

I/O components 23, in one embodiment, are provided to facilitate input and output operations. I/O components 23 for various embodiments of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. It can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. It can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 13 shows one embodiment in which device 16 is a tablet computer 800. In FIG. 13, computer 800 is shown with user interface display screen 802. Screen 802 can be a touch screen or a pen-enabled interface that receives inputs from a pen or stylus. It can also use an on-screen virtual keyboard. Of course, it might also be attached to a keyboard or other user input device through a suitable attachment mechanism, such as a wireless link or USB port, for instance. Computer 800 can also illustratively receive voice inputs as well.

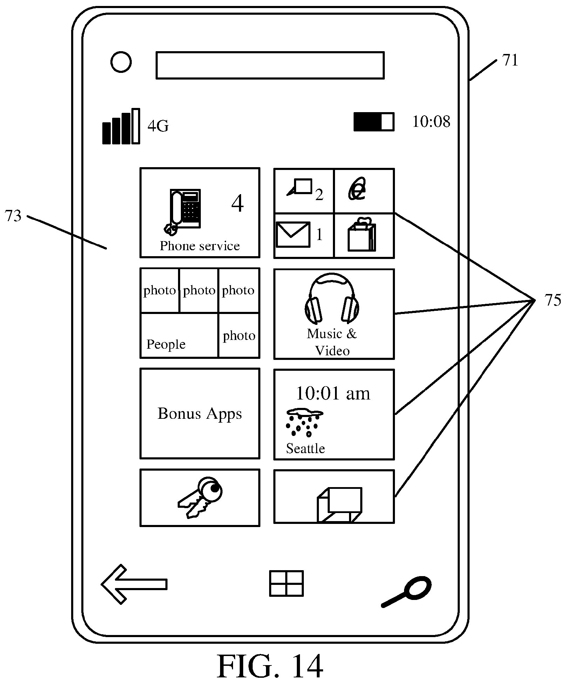

FIG. 14 is similar to FIG. 13 except that the device 16 is a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

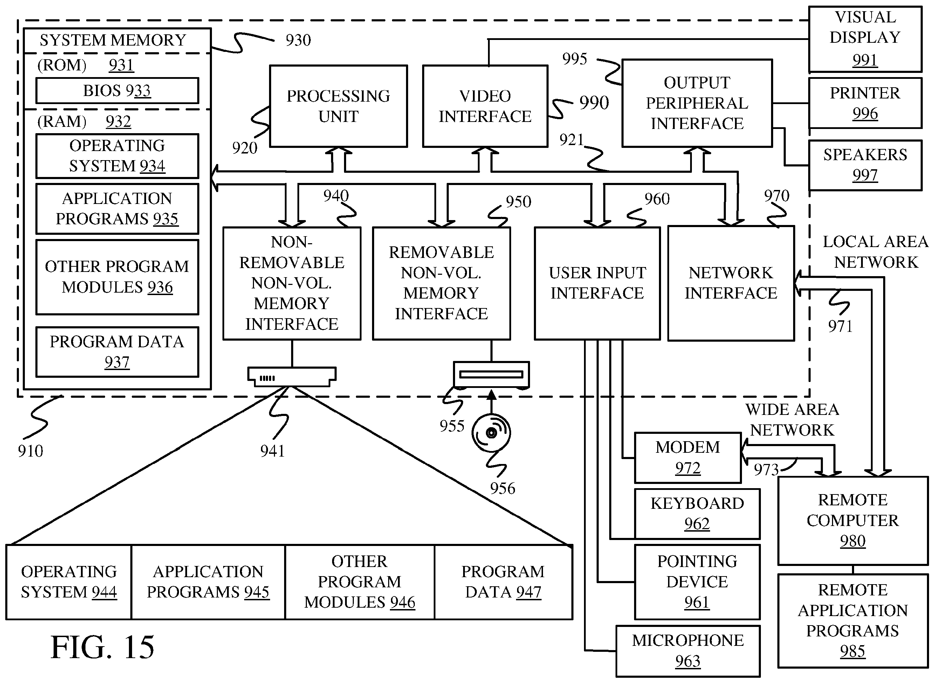

FIG. 15 is one embodiment of a computing environment in which elements of FIG. 2, or parts of it, (for example) can be deployed. With reference to FIG. 15, an exemplary system for implementing some embodiments includes a general-purpose computing device in the form of a computer 910. Components of computer 910 may include, but are not limited to, a processing unit 920 (which can comprise processor(s) 232, 274, or 310), a system memory 930, and a system bus 921 that couples various system components including the system memory to the processing unit 920. The system bus 921 may be any of several types of bus structures including a memory bus or memory controller, a peripheral bus, and a local bus using any of a variety of bus architectures. Memory and programs described with respect to FIG. 2 can be deployed in corresponding portions of FIG. 15.

Computer 910 typically includes a variety of computer readable media. Computer readable media can be any available media that can be accessed by computer 910 and includes both volatile and nonvolatile media, removable and non-removable media. By way of example, and not limitation, computer readable media may comprise computer storage media and communication media. Computer storage media is different from, and does not include, a modulated data signal or carrier wave. It includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 910. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 930 includes computer storage media in the form of volatile and/or nonvolatile memory such as read only memory (ROM) 931 and random access memory (RAM) 932. A basic input/output system 933 (BIOS), containing the basic routines that help to transfer information between elements within computer 910, such as during start-up, is typically stored in ROM 931. RAM 932 typically contains data and/or program modules that are immediately accessible to and/or presently being operated on by processing unit 920. By way of example, and not limitation, FIG. 15 illustrates operating system 934, application programs 935, other program modules 936, and program data 937.

The computer 910 may also include other removable/non-removable volatile/nonvolatile computer storage media. By way of example only, FIG. 15 illustrates a hard disk drive 941 that reads from or writes to non-removable, nonvolatile magnetic media, an optical disk drive 955, and nonvolatile optical disk 956. The hard disk drive 941 is typically connected to the system bus 921 through a non-removable memory interface such as interface 940, and magnetic disk drive 951 and optical disk drive 955 are typically connected to the system bus 921 by a removable memory interface, such as interface 950.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 15, provide storage of computer readable instructions, data structures, program modules and other data for the computer 910. In FIG. 15, for example, hard disk drive 941 is illustrated as storing operating system 944, application programs 945, other program modules 946, and program data 947. Note that these components can either be the same as or different from operating system 934, application programs 935, other program modules 936, and program data 937.

A user may enter commands and information into the computer 910 through input devices such as a keyboard 962, a microphone 963, and a pointing device 961, such as a mouse, trackball or touch pad. Other input devices (not shown) may include a joystick, game pad, satellite dish, scanner, or the like. These and other input devices are often connected to the processing unit 920 through a user input interface 960 that is coupled to the system bus, but may be connected by other interface and bus structures. A visual display 991 or other type of display device is also connected to the system bus 921 via an interface, such as a video interface 990. In addition to the monitor, computers may also include other peripheral output devices such as speakers 997 and printer 996, which may be connected through an output peripheral interface 995.

The computer 910 is operated in a networked environment using logical connections (such as a local area network - LAN, or wide area network WAN) to one or more remote computers, such as a remote computer 980.

When used in a LAN networking environment, the computer 910 is connected to the LAN 971 through a network interface or adapter 970. When used in a WAN networking environment, the computer 910 typically includes a modem 972 or other means for establishing communications over the WAN 973, such as the Internet. In a networked environment, program modules may be stored in a remote memory storage device. FIG. 15 illustrates, for example, that remote application programs 985 can reside on remote computer 980.

## Claims

1. A mobile agricultural machine (101), comprising:
a sensor (236) configured to detect a characteristic comprising a geographic location of a weed in an environment in which the mobile agricultural machine (101) performs an operation and to generate a sensor signal indicative of the characteristic;
a confidence system (230) comprising data store accessing logic (366) configured to access a data store (37) having stored data indicative of characteristics that can affect an ability of the mobile agricultural machine (101) to perform the operation;
the confidence system (230) configured to receive the stored data and generate a confidence level value indicative of a confidence in an ability of the mobile agricultural machine (101) to perform the operation, based on the stored data; the confidence system (230) comprising threshold logic (358) configured to compare the confidence level value to a confidence level value threshold indicative of a desired confidence level value; the confidence system (230) comprising an action signal generator (356) configured to generate an action signal to control an action of the mobile agricultural machine (101) based on the comparison of the confidence level value to the confidence level value threshold;
a mobile agricultural spraying system (102) configured to apply a substance to a surface in the environment in which the mobile agricultural machine (101) performs the operation, wherein the operation comprises a targeted substance application operation in which the mobile agricultural spraying system (102) applies the substance to the geographic location of the weed in the environment;
wherein the action signal controls a spraying subsystem (214) of the mobile agricultural spraying system (102) to change the operation of the mobile agricultural spraying system (102) from the targeted substance application operation to a broadcast substance application operation,
or wherein the action signal controls an interface mechanism (260), accessible to an operator of the mobile agricultural machine (101), to display an indication (452) of the confidence level value, wherein the display includes an indication (462) of a recommendation to change the operation of the mobile agricultural spraying system (102) from the targeted substance application operation to a broadcast substance application operation, and the indication of the recommendation (462) is an actuatable mechanism, actuatable by an operator to implement the recommendation.

2. The mobile agricultural machine (101) of claim 1, wherein the action signal activates one or more spray nozzles (112) of the spraying subsystem (214).

3. The mobile agricultural machine (101) of claim 1, wherein the characteristics that can affect an ability of the mobile agricultural machine (101) to perform the operation comprise one or more sensor characteristics that can affect an ability of the sensor to accurately detect the characteristic.

4. The mobile agricultural machine (101) of claim 1, wherein the sensor (236) is a perception sensor (128) mounted to the mobile agricultural spraying system (102) and configured to detect the geographic location of the weed on the surface ahead of a boom (116) that carries the substance from a substance source to a plurality of spray nozzles (112) disposed along the boom (116).

## Patentansprüche

1. Mobile Landmaschine (101), die Folgendes umfasst:
einen Sensor (236), der dazu ausgelegt ist, eine Eigenschaft zu detektieren, die einen geografischen Standort eines Unkrauts in einer Umgebung umfasst, in der die mobile Landmaschine (101) einen Betrieb durchführt, und ein Sensorsignal zu erzeugen, das die Eigenschaft angibt;
ein Konfidenzsystem (230), das eine Datenspeicherzugriffslogik (366) umfasst, die dazu ausgelegt ist, auf einen Datenspeicher (37) zuzugreifen, der gespeicherte Daten aufweist, die Eigenschaften angeben, die eine Fähigkeit der mobilen Landmaschine (101) zum Durchführen des Betriebs beeinflussen können;
wobei das Konfidenzsystem (230) dazu ausgelegt ist, die gespeicherten Daten zu empfangen und basierend auf den gespeicherten Daten einen Konfidenzniveauwert zu erzeugen, der ein Vertrauen in eine Fähigkeit der mobilen Landmaschine (101) zum Durchführen des Betriebs angibt;
wobei das Konfidenzsystem (230) eine Schwellenwertlogik (358) umfasst, die dazu ausgelegt ist, den Konfidenzniveauwert mit einem Konfidenzniveauschwellenwert, der einen gewünschten Konfidenzniveauwert angibt, zu vergleichen; wobei das Konfidenzsystem (230) einen Aktionssignalgenerator (356) umfasst, der dazu ausgelegt ist, basierend auf dem Vergleich des Konfidenzniveauwerts mit dem Konfidenzniveauschwellenwert ein Aktionssignal zum Steuern einer Aktion der mobilen Landmaschine (101) zu erzeugen;
ein mobiles landwirtschaftliches Sprühsystem (102), das dazu ausgelegt ist, auf eine Oberfläche in der Umgebung, in der die mobile Landmaschine (101) den Betrieb durchführt, eine Substanz aufzutragen, wobei der Betrieb einen gezielten Substanzauftragsbetrieb umfasst, in dem das mobile landwirtschaftliche Sprühsystem (102) die Substanz auf den geografischen Standort des Unkrauts in der Umgebung aufträgt;
wobei das Aktionssignal ein Sprühteilsystem (214) des mobilen landwirtschaftlichen Sprühsystems (102) steuert, um den Betrieb des mobilen landwirtschaftlichen Sprühsystems (102) von dem gezielten Substanzauftragsbetrieb zu einem breitsprühenden Substanzauftragsbetrieb zu ändern,
oder wobei das Aktionssignal einen Schnittstellenmechanismus (260) steuert, auf den ein Bediener der mobilen Landmaschine (101) zugreifen kann, um eine Angabe (452) des Konfidenzniveauwerts anzuzeigen, wobei die Anzeige eine Angabe (462) einer Empfehlung zum Ändern des Betriebs des mobilen landwirtschaftlichen Sprühsystems (102) von dem gezielten Substanzauftragsbetrieb zu einem breitsprühend Substanzauftragsbetrieb beinhaltet, und wobei die Angabe der Empfehlung (462) ein zu betätigender Mechanismus ist, der von einem Bediener betätigt werden kann, um die Empfehlung umzusetzen.

2. Mobile Landmaschine (101) nach Anspruch 1, wobei das Aktionssignal eine oder mehrere Sprühdüsen (112) des Sprühteilsystems (214) aktiviert.

3. Mobile Landmaschine (101) nach Anspruch 1, wobei die Eigenschaften, die eine Fähigkeit der mobilen Landmaschine (101) zum Durchführen des Betriebs beeinflussen können, eine oder mehrere Sensoreigenschaften umfassen, die eine Fähigkeit des Sensors zum genauen Detektieren der Eigenschaft beeinflussen können.

4. Mobile Landmaschine (101) nach Anspruch 1, wobei der Sensor (236) ein Wahrnehmungssensor (128) ist, der an dem mobilen landwirtschaftlichen Sprühsystem (102) montiert ist und dazu ausgelegt ist, den geografischen Standort des Unkrauts auf der Oberfläche vor einem Ausleger (116), der die Substanz von einer Substanzquelle zu mehreren entlang des Auslegers (116) angeordneten Sprühdüsen (112) trägt, zu detektieren.

## Revendications

1. Machine agricole mobile (101), comprenant :
un capteur (236) configuré pour détecter une caractéristique comprenant un emplacement géographique d'une mauvaise herbe dans un environnement dans lequel la machine agricole mobile (101) réalise une opération, et pour générer un signal de capteur indiquant la caractéristique ;
un système de confiance (230) comprenant une logique (366) d'accès à un magasin de données configurée pour accéder à un magasin de données (37) contenant des données stockées indiquant des caractéristiques susceptibles d'affecter une aptitude de la machine agricole mobile (101) à réaliser l'opération ;
le système de confiance (230) étant configuré pour recevoir les données stockées et générer une valeur de niveau de confiance indiquant une confiance dans une aptitude de la machine agricole mobile (101) à réaliser l'opération, sur la base des données stockées ; le système de confiance (230) comprenant une logique de seuil (358) configurée pour comparer la valeur de niveau de confiance avec un seuil de valeur de niveau de confiance indiquant une valeur de niveau de confiance souhaitée ; le système de confiance (230) comprenant un générateur de signal d'action (356) configuré pour générer un signal d'action destiné à commander une action de la machine agricole mobile (101) sur la base de la comparaison de la valeur de niveau de confiance avec le seuil de valeur de niveau de confiance ;
un système de pulvérisation agricole mobile (102) configuré pour appliquer une substance sur une surface dans l'environnement dans lequel la machine agricole mobile (101) réalise l'opération, l'opération comprenant une opération d'application ciblée de substance dans laquelle le système de pulvérisation agricole mobile (102) applique la substance à l'emplacement géographique de la mauvaise herbe dans l'environnement ;
dans laquelle le signal d'action commande un sous-système de pulvérisation (214) du système de pulvérisation agricole mobile (102) de manière à faire passer le système de pulvérisation agricole mobile (102) de l'opération d'application ciblée de substance à une opération d'application en plein de substance,
ou dans laquelle le signal d'action commande un mécanisme d'interface (260), accessible à un opérateur de la machine agricole mobile (101), afin d'afficher une indication (452) de la valeur de niveau de confiance, l'affichage comportant une indication (462) d'une recommandation de faire passer le système de pulvérisation agricole mobile (102) de l'opération d'application ciblée de substance à une opération d'application en plein de substance, et l'indication de la recommandation (462) étant un mécanisme actionnable, pouvant être actionné par un opérateur afin de mettre en œuvre la recommandation.

2. Machine agricole mobile (101) selon la revendication 1, dans laquelle le signal d'action active une ou plusieurs buses de pulvérisation (112) du sous-système de pulvérisation (214).

3. Machine agricole mobile (101) selon la revendication 1, dans laquelle les caractéristiques susceptibles d'affecter une aptitude de la machine agricole mobile (101) à réaliser l'opération comprennent une ou plusieurs caractéristiques de capteur susceptibles d'affecter une aptitude du capteur à détecter avec précision la caractéristique.

4. Machine agricole mobile (101) selon la revendication 1, dans laquelle le capteur (236) est un capteur de perception (128) monté sur le système de pulvérisation agricole mobile (102) et configuré pour détecter l'emplacement géographique de la mauvaise herbe sur la surface en avant d'une rampe (116) qui transporte la substance depuis une source de substance jusqu'à une pluralité de buses de pulvérisation (112) disposées le long de la rampe (116).
